(19) Europäisches Patentamt
European Patent Office
Office européen des brevets

(11) EP 0 678 409 B1

(12) **EUROPEAN PATENT SPECIFICATION**

(45) Date of publication and mention of the grant of the patent:
**05.08.1998 Bulletin 1998/32**

(51) Int. Cl.$^6$: **B60H 1/32**

(21) Application number: **95104831.3**

(22) Date of filing: **31.03.1995**

(54) **Air-conditioning apparatus**

Klimaanlage

Appareil de conditionnement d'air

(84) Designated Contracting States:
**DE FR GB**

(30) Priority: **23.05.1994 JP 108142/94**
**21.04.1994 JP 82875/94**

(43) Date of publication of application:
**25.10.1995 Bulletin 1995/43**

(73) Proprietor: **DENSO CORPORATION**
**Kariya-City Aichi-Pref. 448 (JP)**

(72) Inventors:
- **Iritani, Kunio**
  **Anjo-city, Aichi-pref., 446 (JP)**
- **Suzuki, Takahisa**
  **Kariya-city, Aichi-pref., 448 (JP)**
- **Isaji, Akira**
  **Nishio-city, Aichi-pref., 445 (JP)**

(74) Representative:
**Klingseisen, Franz, Dipl.-Ing. et al**
**Patentanwälte,**
**Dr. F. Zumstein,**
**Dipl.-Ing. F. Klingseisen,**
**Bräuhausstrasse 4**
**80331 München (DE)**

(56) References cited:
**US-A- 5 052 189** **US-A- 5 299 431**

- **PATENT ABSTRACTS OF JAPAN vol. 17 no. 645 (M-1517) ,30 November 1993 & JP-A-05 203274 (NIPPONDENSO CO LTD)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 678 409 B1

## Description

The invention relates to an air-conditioning apparatus according to the preamble of claim 1.

Such an air-conditioning apparatus is known from US-A-5 299 431, wherein during the dehumidifying operation the refrigerant flows in the order of compressor, indoor heat exchanger, expansion valve, outdoor heat exchanger, electromagnetic valve, indoor evaporator and accumulator. Only an expansion valve functions as a decompressing means. In such a known dehumidifying cycle it is not possible to control the temperatures of evaporator and condenser in a wide range.

As an air-conditioning apparatus mounted on, for example an electrical vehicle, in recent years there have been items which employ a refrigeration cycle which doubles in use as a heat pump. Such devices are intended to switch a heater-cooler unit by means of switching, using a valve, a circulation path of refrigerant.

In order to perform dehumidification from a heater-cooler unit with a refrigeration cycle that doubles in use as heat pump, as disclosed in Japanese Patent Application No. 4-107027, it has been proposed that a condenser be positioned in an air-conditioning apparatus evaporator be positioned within an air duct as well as disposing an exterior heat exchanger outside the air duct. This condenser, exterior heat exchanger, and evaporator are provided in a refrigerant circulation circuit, and by switching a valve provided in this refrigerant circulation circuit and switching the circulation circuit for the refrigerant, the device is changed from a heater to an air-conditioner to a dehumidification device. The operation mode is changed as follows: in the cooling mode, refrigerant discharged from the compressor flows from the exterior heat exchanger to the evaporator and is returned to the compressor, and the exterior heat exchanger functions as an "exterior condenser." In the heater mode, refrigerant discharged from the compressor flows from the condenser to the to the exterior heat exchanger and is returned to the compressor, and the exterior heat exchanger functions as an "exterior evaporator." Further, in the dehumidification mode, refrigerant discharged from the compressor flows from the condenser to the evaporator via the exterior heat exchanger, and air dehumidified and chilled by the evaporator is heated to the target blowing temperature by the condenser and is blown into the passenger compartment.

In order to control the blowing temperature during cooler, heater, or dehumidification modes in such an air-conditioning apparatus, an exterior fan which forces air toward the exterior heat exchanger is provided. The fan varies the heat-exchanging capacity (heat-absorbing or heat-radiating capacity) of the exterior heat exchanger by switching the revolving speed of this exterior fan, thus affecting the heat-radiating capacity of the condenser and the heat-absorbing capacity of the evaporator.

In the case where an air-conditioning apparatus such as that described above is installed in a vehicle such as a van, because of the relationship whereby the exterior heat exchanger is installed horizontally on the bottom surface of the vehicle body, effects due to vehicle-speed wind (wind received in accordance with vehicle travel) with respect to the heat-exchanging capacity of the exterior heat exchanger are hardly exerted. For this reason it is possible to actively control the heat-exchanging capacity of the exterior heat exchanger by means of switching the revolving speed of an exterior fan.

In contrast to this, in the case where the foregoing exterior heat exchanger was installed in a location receiving vehicle speed wind from the front grille, as is the case when mounted on an ordinary vehicle -- i.e., a vehicle with a structure that takes in vehicle speed wind from the front grille -- the heat-exchanging capacity of the exterior heat exchanger fluctuated in accordance with the magnitude of vehicle speed. Thus, the following problem arose with the prior art.

Briefly, in the cooler mode and the heater mode, the temperature of the evaporator working as a heat exchanger for the cooler and the temperature of the condenser working as a heat exchanger for the heater in the respective modes do not fluctuate greatly even in the case when the heat-exchanging capacity of the exterior heat exchanger has fluctuated, and so there is no large fluctuation in the temperature of the air conditioner air, and no impediment occurs in practical usage.

In the dehumidification mode, however, where the condenser acts as a reheating source for the air dehumidified and chilled by the evaporator, the condenser and exterior heat exchanger function as a refrigerant condenser in a series-connected state, and a phenomenon occurs wherein the temperature of the condenser fluctuates according to the magnitude of the vehicle speed. That is to say, in the case when vehicle speed is large, the heat-radiating performance of the foregoing condenser and exterior heat exchanger, and in its turn the condensation performance, rise and condensation pressure drops, and so the temperature of the condenser experiences a relative decline. Additionally, in the case when vehicle speed is small (including times when the vehicle is stopped), the condensation performance of the condenser and exterior heat exchanger fall and condensation pressure rises, and so the temperature of the condenser experiences a relative rise. Because of this, when in the dehumidification mode the blowing temperature dependent on the temperature of the condenser fluctuates in accordance with the magnitude of the vehicle speed, and there is the problem that comfortable air conditioning cannot be expected.

Additionally, there is the drawback that the adjustment range of the heat-exchanging capacity of the exterior heat exchanger obtained by means of switching the revolving speed of the exterior fan is not sufficient when seen from the temperature adjustment range of the blown air that is actually required, and the temperature adjustment range of the blown air is narrow.

## SUMMARY OF THE INVENTION

In light of such circumstances, it is an object of the present invention to provide an air-conditioning apparatus which performs reliably even when dehumidification is selected. A heater-cooler unit, by means of a refrigeration cycle which doubles in use as heat pump. Furthermore, during dehumidification mode, it is possible to effectively prevent fluctuations in blowing temperature due to the magnitude of the vehicular speed. Rather, the dehumidification device performs constantly comfortable air-conditioning operation. This enables the expansion of the temperature adjustment range of the blown air during the dehumidification mode and can improve temperature controllability during the dehumidification mode, even in the case when mounted with respect to a vehicle in a state such that wind accompanying the travel thereof exerts an effect on the heat-radiating system of the foregoing refrigeration cycle.

This object is achieved by the features in the characterizing part of claim 1.

In the present invention, during the dehumidification mode refrigerant discharged from the compressor flows sequentially from the condenser through the first restrictor, the exterior heat exchanger, and the second restrictor to the evaporator, and wind dehumidified and chilled by the evaporator is reheated up to the target blowing temperature by using the generated heat of the condenser. Wind is blown into the passenger compartment. In such a dehumidification mode, the condenser and exterior heat exchanger function as a refrigerant condenser in a series-connected state, but in actuality the First restrictor is provided between the condenser and the exterior heat exchanger, and so the majority of refrigerant discharged from the compressor is condensed by the condenser. Further, along with this, the condensation heat thereof is provided for heat exchange with the wind dehumidified and chilled by the evaporator. Consequently, because a state where refrigerant of comparatively low temperature flows into the exterior heat exchanger -- in other words, a state wherein the difference between the temperature of refrigerant flowing into the exterior heat exchanger and the ambient air temperature has become small -- the exterior heat exchanger can be considered as simply a pipe for refrigerant passage. As a result of the above, in the case where the air-conditioning apparatus is mounted on a vehicle, the temperature of the condenser during the dehumidification mode becomes resistant to fluctuations according to the magnitude of vehicle speed and the temperature of blown air after being reheated by means of the condenser is stabilized, even when the exterior heat exchanger is disposed in a state receiving wind accompanying travel of the vehicle.

## BRIEF DESCRIPTION OF THE DRAWINGS

Other objects, features and characteristics of the present invention will be come apparent upon study of the following detailed description, the appended claims and the accompanying drawings, all of which from a part of this specification. In the drawings:

FIG. 1 is a structural schematic drawing indicating the entirety of an air-conditioning apparatus according to a first embodiment of this invention;
FIG. 2 is a front view of an air conditioner control panel;
FIG. 3 is a diagram indicating the relationship between operation modes of a refrigeration cycle and operation modes of an exterior fan;
FIG. 4 consists of FIGS. 4A and 4B which together show a flowchart of a control program;
FIG. 5A is a diagram indicating a relationship between set temperature sense **Sset** and **Tset'**;
FIG. 5B is a diagram indicating a relationship between ambient air temperature **Tam** and **ΔTam**;
FIG. 5C is diagram indicating a relationship between amount of sunlight **Ts** and **ΔTs**;
FIG. 6 is a diagram indicating a relationship between required quantity of heat **QAO** and quantity of air **VB**;
FIG. 7 is a diagram indicating a relationship between quantity of blown air **VAO** and blower voltage;
FIG. 8 is a diagram indicating a relationship between compressor revolving speed on the one hand and evaporator exit temperature and condenser exit temperature on the other as parameters for aperture opening of an electronic expansion valve;
FIG. 9 is a diagram indicating a relationship between valve stroke (valve opening) of an electronic expansion valve and refrigerant flow;
FIG. 10 is a diagram indicating a relationship between valve stroke (valve opening) of an electronic expansion valve utilized in a second embodiment according to this invention and refrigerant flow;
FIG. 11 is a structural schematic drawing indicating the entirety of an air-conditioning apparatus according to a second embodiment of this invention;
FIG. 12 consists of FIGS. 12A and 12B which together show a flowchart of a control program;
FIG. 13 is a flowchart of the salient areas of the same control program;

FIG. 14 is a diagram indicating a relationship between inner air temperature **Tr** and ambient air temperature **Tam** as well as ranks of combinations of valve openings of two electronic expansion valves;

FIG. 15 indicates the content of ranks of combinations of valve openings of two electronic expansion valves;

FIG. 16 is a diagram indicating a relationship between valve opening of an electronic expansion valve and refrigerant flow;

FIG. 17 a diagram indicating a relationship between compressor revolving speed and evaporator exit temperature as well as indicating a relationship between compressor revolving speed and actual blowing temperature from an air duct as parameters for ranks of combinations of valve openings of two electronic expansion valves;

FIG. 18 is a structural schematic drawing indicating the salient areas of an air-conditioning apparatus according to a third embodiment of this invention;

FIGS. 19A and 19B are drawings for the purpose of describing the operation of the present invention;

FIG. 20 is a Mollier diagram of dehumidification mode;

FIG. 21 is a structural schematic drawing indicating the salient areas of an air-conditioning apparatus according to a fourth embodiment of this invention;

FIG. 22 is a structural schematic drawing indicating the salient areas of an air-conditioning apparatus according to a fifth embodiment of this invention; and

FIG. 23 is a structural schematic drawing indicating the entirety of an air-conditioning apparatus according to a sixth embodiment of this invention.

## DETAILED DESCRIPTION OF THE PRESENTLY PREFERRED EXEMPLARY EMBODIMENT

A first embodiment according to this invention implemented in an air-conditioning apparatus of an electric automobile will be described hereinafter with reference to FIGS. 1 to 10. The structural schematic of the entire air-conditioning apparatus will be described first with reference to FIG. 1.

Outer air intake port 22, which takes in air (outer air) from outside a passenger compartment, and two inner air intake ports 23 and 34 which take in air (inner air) within the passenger compartment are provided at the upstream side of air duct 21. Inner/outer air damper 25 is provided at an intermediate position between inner air intake port 23 and air intake port 22. By adjusting the degree of opening of inner/outer air damper 25 using a servomotor 26, the mix ratio of air taken in from outer air intake port 22 and inner air intake ports 23 and 24 can be varied to control the intake air temperature. On the downstream side of inner/outer air damper 25 and the downstream side of inner air intake port 24, blowers 27 and 28 are provided, with blowers 27 and 28 being installed on a rotating shaft of blower motor 29. Blower motor 29 is driven by a drive circuit 30.

Evaporator 31 is disposed on the downstream side of blowers 27 and 28, and the downstream side of evaporator 31 is partitioned into two air passages 33 and 34 (upper and lower) by partition plate 32. Condenser 35 is disposed in the lower air passage 34. The top of condenser 35 protrudes within upper air passage 33. Above condenser 35 is disposed strong-cooling damper 36, which is driven by servomotor 37. The amount of air bypassing condenser 35 can be varied using damper 36. Additionally, communicating damper 38 is disposed on communicating port 32a provided on the partition plate 32 downstream of the condenser 35. By means of driving this communicating damper 38 by a servomotor 39, the amount of air passing through communicating port 32a of the partition plate 32 can be varied, and air resistance during a single mode (for example FACE mode, DEF mode, etc.) is reduced.

DEF vent 40 and FACE vent 41 are provided on the downstream side of upper air passage 33. DEF vent 40 and FACE vent 41 are provided with respective dampers 48 and 49, and dampers 48 and 49 are driven by respective servomotors 50 and 51. FOOT vent 52 which blows air toward the feet of a passenger is provided on the downstream side of lower air passage 34. FOOT vent 52 also includes damper 54 driven by a servomotor 53.

The evaporator 31 and condenser 35 are the constituent elements of refrigeration cycle 55 which doubles in use as a heat pump. As shown in FIG. 1, a refrigerant circulation circuit of refrigeration cycle 55 is composed of a compressor 56, four-way switching valve 57, exterior heat exchanger 58, check valve 59, capillary 61, solenoid valve 62, electronic expansion valve 65, accumulator 90, evaporator 31, and condenser 35 connected by piping. Electronic expansion valve 65 is provided as a variable aperture (corresponding to the First restrictor according to this invention) in the refrigerant passage between condenser 35 and exterior heat exchanger 58. Electronic expansion valve is the same as electric expansion valve in general. In this specification, the term "electronic expansion valve" includes " electric expansion valve". Capillary 61 is provided as a fixed aperture (corresponding to the second restrictor according to this invention) in the refrigerant passage between exterior heat exchanger 58 and evaporator 31. Solenoid valve 62, electronic expansion valve 65, and four-way switching valve 57 are switched as shown in the following Table I according to the operation mode of the refrigeration cycle 55.

Table I

| Input | Output | | |
|---|---|---|---|
| Operation mode of refrigeration cycle 55 | Solenoid valve 62 | Electronic expansion valve 65 | Four-way switching valve 57 |
| OFF | OFF | Fully Open | OFF (solid line) |
| Cooler | OFF | Filly open | ON (dotted line) |
| Heater | ON | Desired Aperture opening | OFF (solid line) |
| Defrost | OFF | Fully open | OFF (solid line) |
| Dehumidify | OFF | Desired Aperture Opening | OFF (solid line) |

As this Table 1 makes clear, in the cooler mode solenoid valve 62 is switched off and electronic expansion valve 65 is opened fully, and four-way switching valve 57 is switched to the position indicated by dotted lines in FIG. 1 ("ON" position). Refrigerant discharged from discharge port 56a of compressor 56 circulates on a path from check valve 59 to exterior heat exchanger 58, to capillary 61, to evaporator 31, to accumulator 90, and then to intake port 56b of compressor 56. By means of such a circulation, high-temperature gas refrigerant discharged from discharge port 56a of compressor 56 radiates heat and is liquefied by the exterior heat exchanger 58, and this liquefied refrigerant is evaporated by evaporator 32, thereby chilling the air passing through evaporator 31.

In the heater mode, however, solenoid valve 62 is switched "ON" and four-way switching valve 57 is switched to the position indicated by solid lines in FIG. 1 ("OFF" position), and electronic expansion valve 65 is opened to a desired aperture opening. Refrigerant discharged from discharge port 56a of compressor 56 circulates on a path from condenser 35 to electronic expansion valve 65, to exterior heat exchanger 58, to solenoid valve 62, to accumulator 90, and then to intake port 56b of the compressor 56. By means of this, high-temperature gas refrigerant discharged from discharge port 56a of compressor 56 radiates heat and is liquefied by condenser 35, and air passing through condenser 35 is warmed by means of this heat radiation.

Additionally, in the defrost mode, solenoid valve 62 is switched "OFF" and electronic expansion valve 65 is opened fully, four-way switching valve 57 is switched to the position indicated by solid lines in FIG. 1. High-temperature gas refrigerant discharged from discharge port 56a of compressor 56 passes through condenser 35 and electronic expansion valve 65 and is supplied also to exterior heat exchanger 58, and removes frost on the surface of exterior heat exchanger 58.

Also, in the dehumidification mode, solenoid valve 62 is switched "OFF" and four-way switching valve 57 is switched to the position indicated by solid lines in FIG. 1, and electronic expansion valve 65 is opened to a desired aperture opening. This allows the passage of refrigerant from condenser 35 to electronic expansion valve 65, to exterior heat exchanger 58, to capillary 61, and then to evaporator 31. Passage resistance in the refrigerant passage extending from condenser 35 to exterior heat exchanger 58 is switched as desired by means of electronic expansion valve 65.

In addition, an exterior fan for forced-cooling use is provided in the exterior heat exchanger 58. As shown in FIG. 3, a fan motor 89a of exterior fan 89 allows switching to high-speed revolution "HI," low-speed revolution "LO," and stopped "OFF" by means of the operation mode of the refrigeration cycle 55 and output data from various sensors to be described below. For example, in the cooling mode, at an ambient air temperature **Tam**, detected by means of ambient air temperature sensor 78, of 25° C or more "HI" results, and at 22° C or less "LO" results. In the heater mode, however, "HI" results at an ambient air temperature **Tam** of 13° C or less and "LO" results at 16° C or more. Additionally, in the dehumidification mode, determination with the sequential priority of HI > LO > OFF made by means of refrigerant discharge pressure **Pd** of compressor 56 detected by refrigerant discharge pressure sensor 88 and refrigerant discharge temperature **Td** of the compressor 56. For example, if the refrigerant discharge pressure **Pd** is 19 kgf/cm2, "HI" always results, no matter what **Td** may be.

The revolving speed of motor 66 driving compressor 56 of refrigeration cycle 55 is controlled by means of inverter 67. Drive circuit 30 for inverter 67, servomotors 26, 37, 39, 50, 51, and 53, fan motor 89a of the exterior fan 89, and blower motor 29 is controlled by means of electronic control unit (hereinafter termed "ECU") 68. ECU 68 is composed primarily of microcomputer, is provided with CPU 69, RAM 70 which temporarily stored various data and the like, ROM 71 which stores the program indicated in FIG. 4 and the like, A/D converter 72 which converts input data to digital signals, I/O port 73, crystal oscillator 74 which generates a reference signal of several MHz, and the like. Electrical power is supplied via ignition switch 76 from battery 75.

ECU 68 reads, via A/D converter 72, various sensor signals from inner air temperature sensor 77 that detects inner air temperature **Tr**, ambient air temperature sensor 78 that detects ambient air temperature **Tam**, sunlight sensor 79 that detects an amount of sunlight **Ts** entering into the passenger compartment, evaporator exit temperature sensor 80 that detects the air temperature immediately after passing through evaporator 31 (hereinafter termed "evaporator exit temperature") **Te**, condenser exit temperature sensor 81 that detects the air temperature immediately after passing through condenser 35 (hereinafter termed "condenser exit temperature") **Tc**, temperature-sense setting device 82 for enabling a rider to manually set a set temperature sense **Sset** to become the control target, intake air temperature sensor 46 that detects the temperature of air taking into evaporator 31 (hereinafter termed "intake air temperature") **Tin**, discharge temperature sensor 91 that detects the refrigerant discharge temperature **Td**, condenser exit refrigerant temperature sensor 92 that detects the condenser exit refrigerant temperature **Tcr**, and the like.

The above-mentioned temperature-sense setting device 82 is provided with COOL key 82a and WARM key 82b, and is disposed on air conditioner control panel 83 positioned in the center of an instrument panel (not illustrated) of the automobile. As shown in FIG. 2, air conditioner control panel 83 is provided with temperature-sense display 84 in which a plurality of light-emitting elements 84n are arrayed in a horizontal row above the temperature-sense setting device. Temperature-sense display 84 displays the set temperature sense **Sset** input by means of COOL key 82a and WARM key 82b. Temperature sense **Sset** is an index indicating how much cooler or warmer than an average temperature of 25° C as a reference (see FIG. 5A), and in the state before keys 82a and 82b are operated, light-emitting element 84n in the center of the temperature-sense display 84 is illuminated. Each time COOL key 82a is depressed, set temperature sense **Sset** is lowered by one rank and the illuminated position is shifted by one to the left. Each time WARM key 82b is depressed, set temperature sense **Sset** is raised by one rank and the illuminated position is shifted by one to the right. In addition to this, air conditioner control panel 83 is provided with air conditioner ON/OFF switch 85, rear defogger switch 86, and front defroster switch 87.

By executing the control program depicted in FIG. 4, ECU 68 performs control for all aspects of air-conditioning operation, and also, when in the dehumidification mode, functions as a control means regulating the aperture opening of the electronic expansion valve 65, to be described later, and revolving speed of compressor 56.

The content of control by means of the ECU 68 will be described hereinafter with reference to the flowchart of FIG. 4.

First, in step 100, initialization processing is executed to initialize counters and flags to be used in subsequent operational processing, after which execution is transferred to step 110 and set temperature sense **Sset** input by operation of temperature-sense setting device 82 is read and, along with this, the various data for inner air temperature **Tr**, ambient air temperature **Tam**, amount of sunlight **Ts**, evaporator exit temperature **Te**, condenser exit temperature **Tc**, refrigerant discharge temperature **Td**, and condenser exit refrigerant temperature **Tcr** detected by sensors described above are read.

Next, execution is transferred to step 120, and set temperature **Tset** is calculated from set temperature sense **Sset**, ambient air temperature **Tam**, and amount of sunlight **Ts** by means of the following Equation (1).

$$\begin{aligned} Tset &= f\,(Sset, Tam, Ts) \\ &= Tset' + \Delta Tam + \Delta Ts \end{aligned} \qquad (1)$$

Here, $Tset' = 25 + 0.4Sset$ <--> Refer to FIG. 5A $\Delta Tam = (10 - Tam) / 20$ <--> Refer to FIG. 5B $\Delta Ts = -Ts / 1000$ <--> Refer to FIG. 5C

In the above manner, after set temperature **Tset** is calculated, execution is transferred to step 130 and quantity of heat **QAO** required to maintain the interior of the passenger compartment at the set temperature **Tset** is calculated by means of the following Equation (2).

$$QAO = K1 \times Tset - K2 \times Tr - K3 \times Tam - K4 \times C \qquad (2)$$

(K1, K2, K3, and K4: coefficients; C: constant)

After calculating required quantity of heat **QAO** by means of Equation (2), execution is transferred to step 140 and the presence or absence of an ON operation of front defroster switch 87 (hereinafter termed "DEF input") is determined. If there is no DEF input, execution is transferred to step 150 and quantity of air **VB** is calculated from the air quantity characteristics with respect to required quantity of heat QAO indicated in FIG. 6, and quantity of air **VB** is taken as quantity of blown air **VAO**. Next, in step 160 target blowing temperature **TAO** is calculated by means of the following Equation (3).

$$TAO = QAO / Cp \cdot \gamma \cdot VAO) + Tin \qquad (3)$$

Here, **Cp** is the specific heat of the air, $\gamma$ is the specific gravity of the air, and **Tin** is the temperature of the air taken into evaporator 31.

Thereafter, in step 170, the degree of opening of inner/outer air damper 25 is calculated so as to minimize the temperature difference between temperature (intake air temperature) **Tin** of the air taken in from inner air intake ports 23 and 24 and outer air intake port 22, and blowing temperature **TAO**. Next, in step 180, determination of whether to set the operation mode of the refrigeration cycle 55 to either the cooler (air) mode or the heater mode is made by means of the following Equation (4).

$$TM = TAO - Tin \quad (4)$$

The heater mode is selected when the **TM** calculated by means of Equation (4) is $TM \geq +\theta$ (for example $\theta = 2°$ C), the cooler mode is selected when $TM \leq -\theta$, and compressor 56 of refrigeration cycle 55 is stopped when $-\theta < TM < +\theta$.

After the operation mode of refrigeration cycle 55 has been determined in this manner, execution is transferred to step 190, where the degree of opening of the various dampers 36, 38, 46, 48, 49, and 54 are determined on the basis of the blowing temperature **TAO** and the quantity of blown air **VAO**, and either "FACE," "B/L," "FOOT," "FOOT/DEF," or "DEF" is determined to be the blowing mode. This concludes the processing in the case when there is no DEF input.

In the case when there is DEF input, execution is transferred from step 140 to step 155, and quantity of blown air **VAO** at the time of DEF is set, for example at 300 $m^3/h$. Next, in step 165, after the degree of opening of the inner/outer air damper 25 is determined to be the ambient air mode, in step 175 target blowing temperature **TAO** (condenser target exit temperature) is calculated by means of the foregoing Equation (3).

Next, in step 185, determination of whether to set the operation mode of refrigeration cycle 55 to either the cooler mode or the heater mode is made similarly to as described above. (However, in the case when there is DEF input, the air mode is not performed.) Subsequently, execution advances to step 190, and after the blowing mode is determined to be "DEF," execution is transferred to step 200.

Based on the result of step 200, processing proceeds to either of steps 210, 220, or 230 according to the determination of the operation mode in steps 180 or 185. That is to say, in the cooler mode, execution advances to step 210 and various control data are output to various devices, and in step 211 feedback control for the revolving speed of compressor 56 is made by means of PI control or fuzzy control with reference to evaporator exit temperature **Te** detected by means of evaporator exit temperature sensor 80. At this time, in order to achieve quantity of blown air **VAO** calculated in step 150, the blower voltage applied to blower motor 29 is determined by means of the voltage characteristics indicated in FIG. 7 in accordance with the blowing mode. Additionally, if there is no DEF input, when the blown air for target blowing temperature **TAO** is created by mixing inner air and ambient air, the compressor is stopped and mixing of air is performed. When there is DEF input, compressor 56 is operated to perform dehumidification and cooling even in the above-described case.

In the heater mode, execution advances to step 220, various control data are output to various devices, and in step 221 feedback control for the revolving speed of compressor 56 is made by means of PI control or fuzzy control for condenser exit temperature **Tc** detected by means of condenser exit temperature sensor 81. Along with this, in step 222 the aperture opening of electronic expansion valve 65 is controlled so as to optimize the sub-cool of compressor 56 calculated from condenser exit refrigerant temperature **Tcr** detected by means of condenser exit refrigerant temperature sensor and refrigerant discharge pressure **Pd** of compressor 56 detected by means of refrigerant discharge pressure sensor 88. As shown in FIG. 9, the opening characteristic of electronic expansion valve 65 is established so that rate of increase of the refrigerant flow increases suddenly if valve stroke exceeds a specification value ST1.

In the dehumidification mode, execution advances to step 230, evaporator target exit temperature **Teo** is calculated so as to satisfy for example the intake air temperature **Tin** ( 15° C and also 3° C or over). In step 231 control data is output to various devices. Next, in step 232, the revolving speed of compressor 56 is controlled so that the evaporator exit temperature **Te** detected by means of evaporator exit temperature sensor 80 becomes the foregoing evaporator target exit temperature **Teo**. In step 233, the aperture opening of electronic expansion valve 65 is controlled so that condenser exit temperature **Tc** detected by means of condenser exit temperature sensor 81 becomes the target blowing temperature **TAO** (condenser target exit temperature). The relationship between revolving speed of compressor 56, evaporator exit temperature **Te**, condenser exit temperature **Tc**, and the aperture opening of electronic expansion valve 65 at this time is indicated in FIG. 8.

In this case, when the aperture opening of electronic expansion valve 65 is adjusted, the pressures of both condenser 35 and exterior heat exchanger 58 change> Further, the temperature (heat-radiating capacity) of condenser 35 and the temperature of exterior heat exchanger 58 also change. By such a method, if the temperature of exterior heat exchanger 58 becomes sufficiently higher than the ambient air temperature, the heat-radiating capacity of exterior heat exchanger 58 as an "exterior condenser" increases, and heat-radiating capacity of the condenser 35 is lowered in relation thereto. Additionally, if the temperature of exterior heat exchanger 58 approaches the ambient air temperature, the heat-radiating capacity of exterior heat exchanger 58 as an "exterior condenser" drops, and the heat-radiating capacity of condenser 35 is raised, respectively. Moreover, if the temperature of exterior heat exchanger 58 becomes substantially the same as the ambient air temperature, exterior heat exchanger 58 assumes a state where substantially no exchange of heat with the ambient air is performed (a simple refrigerant path).

By adjusting the aperture opening of electronic expansion valve 65 and causing the heat-exchanging functioning of exterior heat exchanger 58 to change in this manner, the heat-radiating capacity of condenser 35 and heat-absorbing capacity of evaporator 31 can be adjusted over a comparatively wide range, the temperature adjustment range of the blown air when in the dehumidification mode can be expanded, and temperature control when in the dehumidification mode can be enhanced.

Furthermore, according to this embodiment the revolving speed of compressor 56 is also adjusted along with the aperture opening of electronic expansion valve 65 when in the dehumidification mode, and so the refrigerant discharge pressure of compressor 56 can also be adjusted. Because of a synergistic effect with the adjustment of the aperture opening of electronic expansion valve 65, evaporator exit temperature **Te** and the condenser exit temperature **Tc** can both be controlled at appropriate temperatures. By means of this, it is possible to control condenser exit temperature **Tc** at an appropriate temperature such that the temperature of the blown air assumes the target blowing temperature **TAO** while controlling evaporator exit temperature **Te** such that sufficient dehumidification capacity is assured within a range where there is no excessive cooling.

Additionally, according to the above-described embodiment, in the case where exterior heat exchanger 58 is disposed in a state receiving wind accompanying travel of the electric vehicle, if the structure is modified so that the aperture opening of electronic expansion valve 65 becomes smaller when, for example, there develops a state wherein the difference between the temperature of exterior heat exchanger 58 and the ambient air temperature expands beyond a pre-established temperature range, then a mode of operation and effects such as the following are obtained.

Briefly, in the dehumidification mode condenser 35 and exterior heat exchanger 58 function as a refrigerant condenser in a series-connected state, but because electronic expansion valve 65 with an aperture opening adjusted to a small state exists between condenser 35 and exterior heat exchanger 58, the majority of refrigerant discharged from compressor 56 is condensed by condenser 35. Along with this, the condensation heat thereof is provided for heat exchange with the wind dehumidified and chilled by evaporator 31. Consequently, because there develops a state wherein refrigerant of comparatively low temperature flows into the exterior heat exchanger 58, in other words, a state wherein the difference between the temperature of refrigerant flowing into exterior heat exchanger 58 and the ambient air temperature has become small, exterior heat exchanger 58 can be considered as simply a pipe for refrigerant passage. As a result of this, the temperature of condenser 35 during the dehumidification mode becomes resistant to fluctuations according to the magnitude of vehicle speed and the temperature of blown air after heat exchange with condenser 35 is stabilized, even when exterior heat exchanger 58 is disposed in a state receiving wind accompanying travel of the vehicle.

Moreover, according to the foregoing embodiment the opening characteristic of electronic expansion valve 65 is established so that a rate of increase of the refrigerant flow increases suddenly if the valve stroke exceeds a specified value **ST1**, as shown in FIG. 9. It is also acceptable to form a variable aperture by connecting in parallel a solenoid valve and a general electrical expansion valve having linear opening characteristics as indicated in FIG. 10. In this case, it is acceptable to cause actuation so as to open the solenoid valve when the aperture opening (valve stroke) of the electrical expansion valve reaches a specified value.

Additionally, according to this embodiment a fixed restrictor, capillary 61, is provided in the refrigerant passage between exterior heat exchanger 58 and evaporator 31. It is also acceptable to change this to electronic expansion valve for cooler use 61' which has a variable aperture (corresponding to the second restrictor according to this invention) and control the aperture opening of expansion valve 61' together with the aperture opening of electronic expansion valve 65 (hereinafter termed the "electronic expansion valve for heater use") on the outlet side of condenser 35, as in a second embodiment according to this invention which is depicted in FIG. 11. Switching control at this time for electronic expansion valves 61' and 65 and four-way switching valve 57 is performed as shown in Table II according to the operation mode of the refrigeration cycle 55.

Table II

| Input | Output | | |
|---|---|---|---|
| Operation Mode of Refrigeration Cycle 55 | Electric Expansion Valve 61' | Electronic Expansion Valve 65 | Four-Way Switching Valve 57 |
| OFF | Fully Open | Fully Open | OFF (solid Line) |
| Cooler | Desired Aperture Opening | Fully Open | ON (dotted line) |
| Heater | Fully Open | Desired Aperture Opening | OFF (solid line) |
| Defrost | Desired Aperture Opening | Fully Open | OFF (solid line) |

Table II (continued)

| Input | Output | | |
|---|---|---|---|
| Operation Mode of Refrigeration Cycle 55 | Electric Expansion Valve 61' | Electronic Expansion Valve 65 | Four-Way Switching Valve 57 |
| Dehumidify | Desired Aperture Opening | Desired Aperture Opening | OFF (solid line) |

In this case, cycle matching during the cooling and defrosting modes can be performed better than in the first embodiment, and along with this temperature control in the dehumidification mode can be further enhanced.

That is to say, by controlling the combination of the degrees of opening of the two electronic expansion valves 61' and 65 as desired during the dehumidification mode, free control is possible, from the case where the temperature of exterior heat exchanger 58 is made higher or lower with respect to the ambient air temperature and exterior heat exchanger 58 is made to function as an "exterior condenser," through the case where it is made to function as a "refrigerant condenser," and to the case where it is made to function as an "exterior evaporator." For this reason, the heat-radiating capacity of condenser 35 and the heat-absorbing capacity of evaporator 31 can be adjusted over a wide range in accordance with exterior and interior temperature and humidity conditions, the temperature control range for blown air during the dehumidification mode can be further expanded, and temperature control can be further enhanced.

A concrete embodiment of a case adopting a system structure such as that depicted in the above-mentioned FIG. 11 will be described hereinafter with reference to FIGS. 12 to 17.

The content of control by means of ECU 68 will be described hereinafter with reference to the flowchart of FIG. 12. However, because FIG. 12 contains areas identical to the content of control indicated in FIG. 4, such portions have been given identical step numbers and descriptions thereof will be omitted, and only differing areas will be described. Additionally, according to this embodiment, the opening characteristics of electronic expansion valve 61' for cooling use and electronic expansion valve 65 for heater use have been established so as to be linear characteristics, as is shown in FIG. 16.

In the case where the branching destination in step 200 is the heater mode, then after execution of step 211 for controlling the compressor revolving speed, step 212 is executed to control the aperture opening of the electronic expansion valve 61' for cooling use so as to assume an appropriate state in accordance with the cooler load.

In the case where the branching destination in step 200 is the dehumidification mode, then after execution of step 232 for controlling the compressor revolving speed, steps 233 and 234 are executed to control the aperture opening of electronic expansion valve 61' for cooling use and electronic expansion valve 65 for heater use. Details of the content of the control in steps 233 and 234 are summarized in FIG. 13, and will be described hereinafter.

Briefly, in FIG. 13, after dehumidification mode selection, it is determined whether this was the first operation (step 240), and in the case of first operation, step 241 is executed in order to determine the initial value for valve opening (defined identical to valve stroke, or in other words, aperture opening) based on inner air temperature **Tr** and ambient air temperature **Tam** at that time.

Here, as is shown in FIG. 16, the valve opening of electronic expansion valves 61' and 65 are controlled in, for example, four stages of A, B, C, and D, and the combinations of the valve opening of electronic expansion valves 61' and 65 are established in five types of ranks from 1 to 5, as is shown in FIG. 15. Then, in step 241, either of the ranks from 1 to 5 is selected on the basis of inner air temperature **Tr**, the ambient air temperature **Tam**, and pre-established characteristics such as those depicted in FIG. 14, and by means of this the initial values for the valve openings of electronic expansion valves 61' and 65. After determination of the initial values for the valve openings in this manner, step 246 is executed to count elapsed time from the initial value, after which there is a return.

Moreover, when step 240 is executed subsequent to this, the decision "NO" is made here, and in this case step 242 is executed to decide whether the fixed time **t** has elapsed. In the case that the fixed time **t** has not elapsed an immediate return is performed, and consequently the valve openings of electronic expansion valves 61' and 65 are maintained without change in their present state during the interval until the fixed time **t** has elapsed.

When the fixed time t has elapsed, in step 243 a determination is made of the relationship of differential temperature **ΔT**, which is actual condenser exit temperature **Tc** subtracted from target blowing temperature **TAO**, with respect to a discrimination value $\alpha$ pre-established with consideration to the allowed range of the temperature control range.

In the case when the relationship is such that $\Delta T \leq -\alpha$, when the actual blowing temperature from air duct 21 indicated by condenser exit temperature **Tc** is in a state higher than the target blowing temperature **TAO**, then after executing step 244 to increase the valve opening combination depicted in FIG. 15 by one rank, there is a return via step 246 to initiate the count for elapsed time. Consequently, in the case where for example the valve opening combination is at rank 3 (i.e., the case where, as can be understood from FIG. 15, the valve opening of electronic expansion valve 61' is C and the valve opening of electronic expansion valve 65 is B (B < C)), and the combination of these valve openings is changed to rank 4 in step 244, adjustment is made so that the valve openings of the electronic expansion valves 61' and 65 both become C. In the case where the combination of valve openings is at rank 5, that state is maintained.

Additionally, in the case when the relationship is such that $\Delta T \geq \alpha$, that is to say, when actual blowing temperature is at a state lower than target blowing temperature **TAO**, then after executing step 245 to increase the valve opening combination depicted in FIG. 15 by one rank, there is a return via step 246 to initiate the count for elapsed time. Consequently, in the case where for example the valve opening combination is at rank 3, adjustment is made so that the combination of these valve openings is changed to rank 2 (i.e., the case where the valve opening of electronic expansion valve 61' is C and the valve opening of electronic expansion valve 65 is A). In the case where the combination of valve openings is at rank 1, that state is maintained.

Moreover, in the case when the relationship is such that $-\alpha < \Delta T < \alpha$, that is to say, in the case when the difference between the actual blowing temperature and target blowing temperature **TAO** is within an allowed range, there is a return via step 246 while maintaining the combination rank of the valve openings in an unchanged state.

As a result of performing the above-described control, in the state where the defrost mode has been selected the combination of valve openings for electronic expansion valve 61' and electronic expansion valve 65 is corrected with each passage of fixed time **t** on the basis of the actual amount of discrepancy of the blowing temperature and target blowing temperature **TAO**. In this case, as is shown in FIG. 17, condenser exit temperature **Tc** and in its turn the actual blowing temperature vary in accordance with the change in the combination of valve openings of electronic expansion valves 61' and 65 between rank 1 and rank 5. In the case when the above-mentioned correction has been performed, the difference between the actual blowing temperature and the target blowing temperature **TAO** is reduced with each passage of fixed time **t**, and the control characteristics for blowing temperature can be effectively and vastly improved.

FIGS. 18 to 20 illustrate third embodiment according to the present invention, and only difference between the first and third embodiments will described below.

Briefly, as is shown in the structural schematic of the salient portions of the air-conditioning apparatus depicted in FIG. 18, this third embodiment provides capillary 65' (corresponding to the firat restrictor of the present invention), which is a fixed restrictor replaces expansion valve 65 of the first embodiment, as well as providing check valve 93 between capillary 65' and exterior heat exchanger 58 to block the inflow of refrigerant from relevant exterior heat exchanger 58 side to capillary 65' side.

In this case, in the dehumidification mode four-way switching valve 57 is switched to the position indicated by solid lines, the "OFF" position, and along with this, electronic expansion valve 65 is switched off. Consequently, refrigerant discharged from discharge port 56a of compressor 56 circulates on a path from condenser 35 to capillary 65', to check valve 93, to exterior heat exchanger 58, to capillary 61, to evaporator 31, to accumulator 90, and then to intake port 56b of compressor 56. By means of this, wind dehumidified and chilled by evaporator 31 is reheated to the target blowing temperature by condenser 35, and is then blown into the passenger compartment.

This operation in the dehumidification mode will be described hereinafter with use of examples of concrete numerical values. Briefly, as is shown typically in FIG. 19 A, in the case where the temperature of the passenger compartment air exchanging heat with evaporator 31 is 25° C and the refrigerant evaporation temperature within evaporator 31 is 1° C, then after the air thereof is dehumidified and chilled to a temperature of for example 7° C by means of heat exchange with evaporator 31, the air is reheated to approximately 41° C by condenser 35 and blown into the passenger compartment.

In this case, in the dehumidification mode condenser 35 and exterior heat exchanger 58 function as a refrigerant condenser in a series-connected state. However, because in actuality capillary 65' is provided between condenser 35 and exterior heat exchanger 58, the majority of the refrigerant, at a temperature of approximately 90° C, discharged from compressor 56 is condensed by condenser 35, and in correspondence with the reheating of the above-mentioned air by means of the condensation heat thereof, the temperature of the refrigerant discharged from compressor 56 is reduced to approximately 18° C.

Consequently, a state develops whereby refrigerant at the comparatively low temperature of approximately 18° C flows into exterior heat exchanger 58, and so the difference between the refrigerant temperature and the ambient air temperature is reduced. Here, in the case where the ambient air temperature is 15° C, as is shown typically in FIG. 19B), the temperature of the refrigerant flowing out from exterior heat exchanger 58 is lowered to approximately 17° C in accordance with the exchange of heat of the ambient air and exterior heat exchanger 58, and along with this the temperature of the ambient air passing through exterior heat exchanger 58 is elevated to approximately 16° C. That is to say, in a state wherein the difference in temperature between the refrigerant flowing into exterior heat exchanger 58 and the ambient air temperature has been reduced, the amount of refrigerant condensation by exterior heat exchanger 58 is reduced, and exterior heat exchanger 58 can be considered as simply a pipe for refrigerant passage. FIG. 20 is a Mollier diagram of the refrigeration cycle in the above-described dehumidification mode.

As a result of this, the temperature of condenser 35 during the dehumidification mode becomes resistant to fluctuations according to the magnitude of vehicle speed, and the temperature of the wind after being reheated by means of condenser 35 is stabilized, even when foregoing exterior heat exchanger 58 is disposed in a state receiving wind accompanying travel of the vehicle.

Moreover, because only capillaries 61 and 65' which are fixed restrictors are provided as restrictors disposed in the refrigerant passage, the structure thereof can be simplified and contribution can be made to reduce production cost. Further, the number of movable portions can be reduced and reliability with respect to service life can be enhanced.

Furthermore, in the case of this embodiment, defrosting operation involving supplying high-temperature gas refrigerant to exterior heat exchanger 58 and removing frost adhering to exterior heat exchanger 58 cannot be performed. However, because an electric vehicle mounted with an air-conditioning apparatus according to this embodiment definitely has standby time for the purpose of recharging, it is acceptable to conduct defrosting of foregoing exterior heat exchanger 58 during this standby time, with no practical obstacles existing.

FIG. 21 depicts a fourth embodiment according to the present invention. Only areas differing from the embodiment of FIG. 18 will be described below.

Briefly, FIG. 21 is a structural schematic of the salient portions of the air-conditioning apparatus. Within air duct 21', evaporator 31 is disposed on the upstream side and condenser 35 is disposed on the downstream side. In this case, condenser 35 is disposed in a state having specified bypass passage 94 in the interval with the side wall of air duct 21'. Air damper 95 provided within the air duct 21' is positioned, indicated by double dotted lines, such that the upstream side of condenser 35 is closed when in the cooling mode, and is positioned, indicated by solid lines, such that the bypass valve is closed when in the heater mode or the dehumidification mode.

A refrigerant circulation circuit of refrigeration cycle 55' including evaporator 31 and condenser 35 connects condenser 35, capillary 65', exterior heat exchanger 58, capillary 61, evaporator 31, and accumulator 90 in this sequence between discharge port 56a and intake port 56b of compressor 56. Also, solenoid valve 65a is connected in parallel with capillary 65' and solenoid valve 62 is connected between exterior heat exchanger 58 and accumulator 90.

According to a refrigeration cycle 55' structured in this manner, in the operating state of compressor 56 refrigerant constantly flows through compressor 56, and in a case such as during the cooling mode when air heating by condenser 35 is not required, the upstream side of condenser 35 is closed by means of air damper 95. Additionally, during the cooling mode solenoid valve 65a is switched to the "ON" state and solenoid valve 62 is switched to the "OFF" state, and during the heater mode solenoid valve 65a is switched to the "OFF" state and solenoid valve 62 is switched to the "ON" state. During the dehumidification mode, electromagnetic valve 65a and solenoid valve 62 are both switched to the "OFF" state.

Consequently, during dehumidification in particular the refrigerant discharged from compressor 56 circulates on a path from condenser 35 to capillary 65', to exterior heat exchanger 58, to capillary 61, to evaporator 31, to accumulator 90, and then to compressor 56, and so effects similar to the above-described third embodiment can be obtained.

FIG. 22 illustrates a fifth embodiment according to this invention. Only differences between the fourth and fifth embodiments will be described below.

Briefly, this embodiment presupposes utilization of combustion type heating unit 96 to conduct heating of the wind which has passed through evaporator 31. Concretely, as is shown in FIG. 22, warm-water heater 96a of combustion type heating unit 96 is disposed within air duct 21', which has evaporator 31 and air damper 95 disposed therein, as a heat source replacing condenser 35 of the fourth embodiment.

In addition to warm-water heater 96a, combustion type heating unit 96 is provided with combustion type heater 96b, heat exchanger 96c, pump 96d, and solenoid valves 96e and 96f in order to form a closed loop along with warm-water heater 96 through which water flows. By means of switches the operation state of pump 96d as well as the open or closed state of solenoid valves 96e and 96f, warm water heated by combustion type heater 96b or warm water heated with heat exchanger 96c is circulated selectively to warm-water heater 96a.

A refrigerant circulation circuit of refrigeration cycle 98 structured including condenser 97 functioning as the heat source of evaporator 31 and heat exchanger 96c connects condenser 97, capillary 65', exterior heat exchanger 58, capillary 61, evaporator 31, and accumulator 90 in this sequence between a discharge port 56a and intake port 56b of compressor 56, together with connecting solenoid valve 65a in parallel with capillary 65' and connecting solenoid valve 62 between exterior heat exchanger 58 and accumulator 90.

According to the above-described structure, during the cooling mode, compressor 56 is operated on refrigeration cycle 98 side and along with this solenoid valve 65a is switched to the "ON" state and solenoid valve 62 is switched to the "OFF" state. Meanwhile, on combustion type heating unit 96 side, operation of combustion type heater 96b and pump 96d is stopped, and along with this solenoid valves 96e and 96f are both switched to the "OFF" state. By means of this, the supply of warm water with respect to warm-water heater 96a is stopped.

Additionally, during the heater mode utilizing combustion type heater 96b, on refrigeration cycle 98 side, compressor 56 is maintained in a stopped state, solenoid valves 65a and 62 are "OFF". While on combustion type heating unit 98 side, combustion type heater 96b and pump 96d are operated, solenoid valve 96e is switched to the "ON" state, and the solenoid valve 96f is switched to the "OFF" state. By means of this, warm water heated by combustion type heater 96b circulates sequentially from warm-water heater 96a to pump 96d, to solenoid valve 96e, and then to combustion type heater 96b.

Furthermore, during the heater mode utilizing the heat-pump function of refrigeration cycle 98, on refrigeration cycle 98 side the compressor 56, solenoid valves 65a and 62 are both switched to the "ON" state, by means of which condenser 97 is made to function as the heat source for the heat-pump cycle and exterior heat exchanger 58 is maintained in a state of functioning as an "evaporator." Meanwhile, on combustion type heating unit 96 side, pump 96d is operated with the operation of combustion type heater 96b remaining stopped, and along with this solenoid valve 96e is switched to the "OFF" state and solenoid valve 96f is switched to the "ON" state. By means of this, warm water heated by condenser 97 at heat exchanger 96c circulates sequentially from warm-water heater 96a to pump 96d, to solenoid valve 96f, and then to heat exchanger 96c.

During the dehumidification mode, on refrigeration cycle 98 side, compressor 56 is operated and along with this solenoid valves 65a and 62 are both switched to the "OFF" state, by means of which condenser 97 is made to function as the heat source for the heat-pump cycle and evaporator 31 is made to demonstrate a chilling function. Meanwhile, on combustion type heating unit 96 side, pump 96d is operated with the operation of combustion type heater 96b remaining stopped, and along with this, solenoid valve 96e is switched to the "OFF" state and solenoid valve 96f is switched to the "ON" state. By means of this, warm water heated by condenser 97 at heat exchanger 96c circulates sequentially from warm-water heater 96a to pump 96d, to solenoid valve 96f, and then to heat exchanger 96c.

Consequently, during the dehumidification mode wind dehumidified and chilled by evaporator 31 is reheated by means of warm-water heater 96a and blown into the passenger compartment, but in this case as well capillary 65' is provided between exterior heat exchanger 58 and condenser 97 serving as the heating source for warm-water heater 96a. Thus, similar to the above-described third embodiment, exterior heat exchanger 58 can be considered as simply a pipe for refrigerant passage. Consequently, the temperature of condenser 97 during the dehumidification mode becomes resistant to fluctuations according to the magnitude of vehicle speed, and the temperature of the blown air after exchanging heat with warm-water heater 96a warmed by means of condenser 35 is stabilized, even when exterior heat exchanger 58 is disposed in a state receiving wind accompanying travel of the automobile, and so comfortable air conditioning can be expected.

Sixth embodiment is shown in Fig. 23. This embodiment is different from first embodiment than only a part of structure of the air-conditioning apparatus.

Outer air intake port 22, which takes in air (outer air) from outside a passenger compartment, and inner air intake port 23 which take in air (inner air) within the passenger compartment are provided at the upstream side of air duct 21. Inner/outer air damper 25 is provided at an intermediate position between inner air intake port 23 and air intake port 22. By adjusting the degree of opening of inner/outer air damper 25 using a servomotor 26, the mix ratio of air taken in from outer air intake port 22 and inner air intake ports 23 can be varied to control the intake air temperature. On the downstream side of inner/outer air damper 25, blower 27 is provided, with blower 27 being installed on a rotating shaft of blower motor 29. Blower motor 29 is driven by a drive circuit 30.

Evaporator 31 is disposed on the downstream side of blower 27. Condenser 35 is disposed at the downstream of evaporator 31 and occupies almost half cross section of duct 21 so that bypass passage 133 is set between condenser 35 and duct 21. Air-mixing damper 36 is disposed at the downstream of evaporator 31 and at the upstream of condenser 35 to control air-mixing ratio between air flowing through condenser 35 and air flowing through bupass passage 133. Air-mixing damper 36 is driven by servomotor 37.

DEF vent 40 and FACE vent 41 are provided on the downstream end of duct 21. DEF vent 40 and FACE vent 41 are provided with respective dampers 49 and 48, and dampers 48 and 49 are driven by respective servomotors 51 and 50. FOOT vent 52 which blows air toward the feet of a passenger is provided on the downstream end of duct 21. FOOT vent 52 also includes damper 54 driven by a servomotor 53.

The evaporator 31 and condenser 35 are the constituent elements of refrigeration cycle 55 which doubles in use as a heat pump. Except electronic expansion valve 61' (Fig. 23) instead of capillary 61 (Fig. 1), a refrigerant circulation circuit of refrigeration cycle 55 is the same as that of first embodiment in Fig. 1. refrigerant circulation circuit 55 is composed of a compressor 56, four-way switching valve 57, exterior heat exchanger 58, check valve 59, electronic expansion valve 61', solenoid valve 62, electronic expansion valve 65, accumulator 90, evaporator 31, and condenser 35 connected by piping. Electronic expansion valve 65 is provided as the first restrictor in the refrigerant passage between condenser 35 and exterior heat exchanger 58. Electronic expansion valve 61' is provided as second restrictor in the refrigerant passage between exterior heat exchanger 58 and evaporator 31. Solenoid valve 62, electronic expansion valve 65, and four-way switching valve 57 are switched as shown in the Table I in the first embodiment according to the operation mode of the refrigeration cycle 55. Since mode of operation is the same as first embodiment, explanation about mode of operation is omitted.

Additionally, this invention is not exclusively limited to the various above-described embodiments, but can be modified or expanded as will be described hereinafter.

Evaporator target exit temperature **Teo** is calculated so as to satisfy the intake air temperature **Tin** - 15° C and also 3° C or over, but it is also acceptable to cause evaporator target exit temperature **Teo** to change in accordance with the ambient air temperature and passenger compartment humidity.

Furthermore, automatic switching of the operation when there is DEF input has been described, but it is also acceptable to perform automatic switching of the operation mode as according to the foregoing embodiments not with DEF input but rather when for example a dehumidification switch or automatic air conditioner switch has been switched on.

In step 155 (FIG. 4), quantity of blown air **VAO** is set at a fixed value, for example 300 $m^3/h$, when during DEF, but it is also acceptable to cause this quantity of blown air **VAO** to change in accordance with required quantity of heat **QAO** or the like. Simultaneously, it is also acceptable to cause the degree of opening of inner/outer air damper 25 determined in step 165 to change without being fixed to the ambient air mode.

According to the second embodiment, the combination of valve openings of electronic expansion valves 61' and 65 is corrected on the basis of the condenser exit temperature **Tc**, which corresponds to information indicating the blowing temperature from air duct 21, but a structure which performs correction on the basis of other information which correlates with the actual blowing temperature is also acceptable. A structure which utilizes combustion type heating unit 96 employed according to the fifth embodiment as a heater source according to the first and second embodiments is also acceptable.

Furthermore, a structure which achieves the content of control of the various steps indicated in FIGS. 4, 12, and 13 by independent circuit means is also acceptable. Additionally, the implementation target is not exclusively limited to an air-conditioning apparatus for an electric vehicle, and it is also acceptable to perform implementation and embodiment in various types of air-conditioning apparatuses such as an air-conditioning apparatus for an engine-driven vehicle, an air-conditioning apparatus for a dwelling, and the like.

As has been made clear in the foregoing description, an air-conditioning apparatus according to this invention which switches an operation mode to either cooling, heater, or dehumidification by means of providing a first restrictor in a refrigerant passage between a condenser and an exterior heat exchanger, providing a second restrictor in a refrigerant passage between the exterior heat exchanger and an evaporator, and switching a valve provided in a refrigerant circulation circuit to switch a circulation path of refrigerant, is structured so as to cause refrigerant to flow sequentially from the condenser through the first restrictor, through the exterior heat exchanger, through the second restrictor, and then to the evaporator when in the dehumidification mode, and so a state of fluctuation in blowing temperature due to the magnitude of vehicle speed during the dehumidification mode can effectively be prevented and constantly comfortable air-conditioning operation can be performed, even in a case of mounting with respect to a vehicle in a state such that wind accompanying the travel thereof exerts an effect on the heat-radiating system of the foregoing refrigerant circulation circuit.

Additionally, in the case where the first restrictor and second restrictor are both formed by means of a fixed aperture, the structure of these restrictors can be simplified and contribution to reduction of production cost can be made, and along with this, the number of movable portions can be reduced and reliability with respect to service life can be enhanced.

Furthermore, if structured so that temperature adjustment of blown air during the dehumidification is performed by means of adjusting the aperture opening of the first restrictor provided between the condenser and the exterior heat exchanger. The heat-radiating capacity of the condenser and the heat-absorbing capacity of the evaporator can be adjusted within a comparatively wide range, and so the temperature adjustment range of the blown air when in the dehumidification mode can be expanded, and temperature control when in the dehumidification mode can be enhanced.

In this case, if made so as to control the revolving speed of the compressor along with the aperture opening of the first restrictor when in the dehumidification mode, the refrigerant discharge pressure of the compressor can also be adjusted, the temperature of the condenser can be controlled such that the temperature of the blown air assumes the target blowing temperature while controlling the temperature of the evaporator such that sufficient dehumidification capacity is assured within a range where there is no excessive cooling, and comfort during the dehumidification can be further enhanced.

Additionally, if structured so that the foregoing first restrictor and second restrictor provided in the respective refrigerant passages between the condenser and the exterior heat exchanger and between the exterior heat exchanger and the evaporator are both formed with a variable aperture, and along with this the combination of aperture openings of these restrictors are corrected based on information indicating blowing temperature from an air duct at each passage of a fixed time during the dehumidification mode to thereby adjust the temperature of the evaporator and the temperature of the condenser, it becomes possible to approach a blowing temperature that takes the actual blowing temperature at each passage of fixed time as the target, and it becomes possible to vastly enhance control characteristics for the blowing temperature.

## Claims

**1.** An air-conditioning apparatus including, within a refrigerant circulation circuit:

an evaporator (31) disposed within an air duct (21),
a condenser (35) functioning as a heating source for air passing through said evaporator (31),
an exterior heat exchanger (58) disposed outside said air duct (21),
a first restrictor (65,65') in a refrigerant passage between said condenser (35) and said exterior heat exchanger (58),
a second restrictor (61,61') in a refrigerant passage between said exterior heat exchanger (58) and said evaporator (31), and
an operational mode of the air-conditioning apparatus being switchable to any one of a cooling, heater, or dehumidification mode by means of switching a valve provided in said refrigerant circulation circuit to switch a circulation path of refrigerant,
wherein during dehumidification mode refrigerant flows sequentially from said condenser (35) through said first restrictor, said exterior heat exchanger (58), and said second restrictor (61,61') to said evaporator (31), and
wherein said first restrictor (65,65') is formed with a variable aperture, characterized in that
temperature of said evaporator (31) and temperature of said condenser (35) can be controlled by means of adjusting the aperture opening of said first restrictor, to control temperature of blown-air.

**2.** An air-conditioning apparatus according to claim 1, further comprising a compressor (56) disposed in said refrigeration cycle, wherein a revolving speed of said compressor (56) provided in said refrigerant circulation circuit can be adjusted, and provided with a control means which during dehumidification mode can control an aperture opening of at least said first restrictor (65,65') as well as said revolving speed of said compressor (56).

**3.** An air-conditioning apparatus according to claim 1, wherein said first restrictor (65,65') and said second restrictor (61,61') are both formed with a variable aperture and combinations of aperture openings of these various restrictors can be established at a plurality of stages, and
wherein during dehumidification mode, temperature of said evaporator (31) and temperature of said condenser (35) can be adjusted by means of correcting combinations of aperture openings of said first restrictor (65,65') and said second restrictor based on information indicating a blowing temperature from an air duct at each passage of a fixed time.

## Patentansprüche

**1.** Klimaanlage mit, und zwar innerhalb eines Kühlmittelumlaufkreises,

einem Verdampfer (31), der innerhalb eines Luftkanals (21) angeordnet ist,
einem Kondensator (35), der als eine Heizquelle für durch den Verdampfer (31) hindurchtretende Luft fungiert,
einem äußeren Wärmetauscher (58), der außerhalb des Luftkanals (21) angeordnet ist,
einer ersten Einschnürung (65, 65') in einem Kühlmittelkanal zwischen dem Kondensator (35) und dem äußeren Wärmetauscher (58),
einer zweiten Einschnürung (61, 61') in einem Kühlmittelkanal zwischen dem äußeren Wärmetauscher (58) und dem Verdampfer (31) und
einer Arbeitsbetriebsart der Klimaanlage, die von einer der Betriebsarten des Kühlens, des Heizens oder des Entfeuchtens durch Schalten eines Ventils schaltbar ist, das in dem Kühlmittelumlaufkreis vorgesehen ist, um eine Umlaufbahn des Kühlmittels zu schalten,
wobei während der Entfeuchtungs-Betriebsart Kühlmittel sequentiell von dem Kondensator (35) aus durch die erste Einschnürung, durch den äußeren Wärmetauscher (58) und durch die zweite Einschnürung (61, 61') hindurch zu dem Verdampfer (31) strömt und
wobei die erste Einschnürung (65, 65') mit einer veränderlichen Öffnung ausgebildet ist, **dadurch gekennzeichnet**, daß
die Temperatur des Verdampfers (31) und die Temperatur des Kondensators (35) durch Einstellen des Öffnen der Öffnung der ersten Einschnürung geregelt werden können, um die Temperatur der Blasluft zu regeln.

**2.** Klimaanlage nach Anspruch 1, weiter umfassend einen Kompressor (56), der in dem Kühlmittelzyklus angeordnet ist, wobei die Drehzahl des Kompressors (56), der in dem Kühlmittelumlaufkreis angeordnet ist, eingestellt werden kann, und mit einem Regelmittel ausgestattet ist, das während der Entfeuchtungs-Betriebsart das Öffnen der Öffnung mindestens der ersten Einschnürung (65, 65') sowie der Drehzahl des Kompressors (56) regeln kann.

**3.** Klimaanlage nach Anspruch 1, wobei die erste Einschnürung (65, 65') und die zweite Einschnürung (61, 61') beide mit einer veränderlichen Öffnung ausgebildet sind und die Kombinationen des Öffnens der Öffnungen dieser verschiedenen Einschnürungen in einer Vielzahl von Stufen durchgeführt werden können und
wobei während der Entfeuchtungs-Betriebsart die Temperatur des Verdampfers (31) und die Temperatur des Kondensators (35) eingestellt werden können im Wege einer Korrektur der Kombinationen des Öffnens der Öffnungen der ersten Einstellung (65, 65') und der zweiten Einschnürung auf der Grundlage einer Information, die die Blastemperatur von einem Luftkanal bei jedem Durchlauf einer festgelegten Zeit angibt.

## Revendications

1. Climatiseur comprenant, à l'intérieur d'un circuit de circulation de réfrigérant :

   un évaporateur (31) disposé à l'intérieur d'un conduit d'air (21),
   un condenseur (35) fonctionnant comme source de chauffage pour l'air passant par ledit évaporateur (31),
   un échangeur de chaleur extérieur (58) disposé à l'extérieur dudit conduit d'air (21),
   un premier limiteur (65, 65') dans un passage de réfrigérant entre ledit condenseur (35) et ledit échangeur de chaleur extérieur (58),
   un second limiteur (61, 61') dans un passage de réfrigérant entre ledit échangeur de chaleur extérieur (58) et ledit évaporateur (31), et
   un mode de fonctionnement du climatiseur étant commutable sur l'un quelconque des modes de refroidissement, de chauffage eu de déshumidification au moyen de la commutation d'une soupape prévue dans ledit circuit de circulation de réfrigérant pour commuter un trajet de circulation de réfrigérant,

   dans lequel pendant le mode de déshumidification, le réfrigérant s'écoute séquentiellement en partant dudit condenseur (35) à travers ledit premier limiteur, ledit échangeur de chaleur extérieur (58) et ledit second limiteur (61, 61') jusqu'audit évaporateur (31), et

   dans lequel ledit premier limiteur (65, 65') est formé avec une ouverture variable, caractérisé en ce que la température dudit évaporateur (31) et la température dudit condenseur (35) peuvent être commandée au moyen de l'ajustement de l'ouverture dudit premier limiteur pour commander la température de l'air soufflé.

2. Climatiseur selon la revendication 1, comprenant de plus un compresseur (56) disposé dans ledit cycle de réfrigération, dans lequel une vitesse de rotation dudit compresseur (56) prévue dans ledit circuit de circulation de réfrigérant peut être ajustée, et muni d'un moyen de commande qui, pendant le mode de déshumidification, peut commander une ouverture d'au moins ledit premier limiteur (65, 65') de même que ladite vitesse de rotation dudit compresseur (56).

3. Climatiseur selon la revendication 1, dans lequel ledit premier limiteur (65, 65') et ledit second limiteur (61, 61') sont tous les deux formés avec une ouverture variable et des combinaisons d'ouverture de ces divers limiteurs peuvent être établies à une pluralité de phases, et

   dans lequel pendant le mode de déshumidification, la température dudit évaporateur (31) et la température dudit condenseur (35) peuvent être ajustées au moyen de combinaisons de correction des ouvertures dudit premier limiteur (65, 65') et dudit second limiteur basé sur des informations indiquant une température de soufflage à partir d'un conduit d'air à chaque passage d'un temps fixé.

FIG. 1

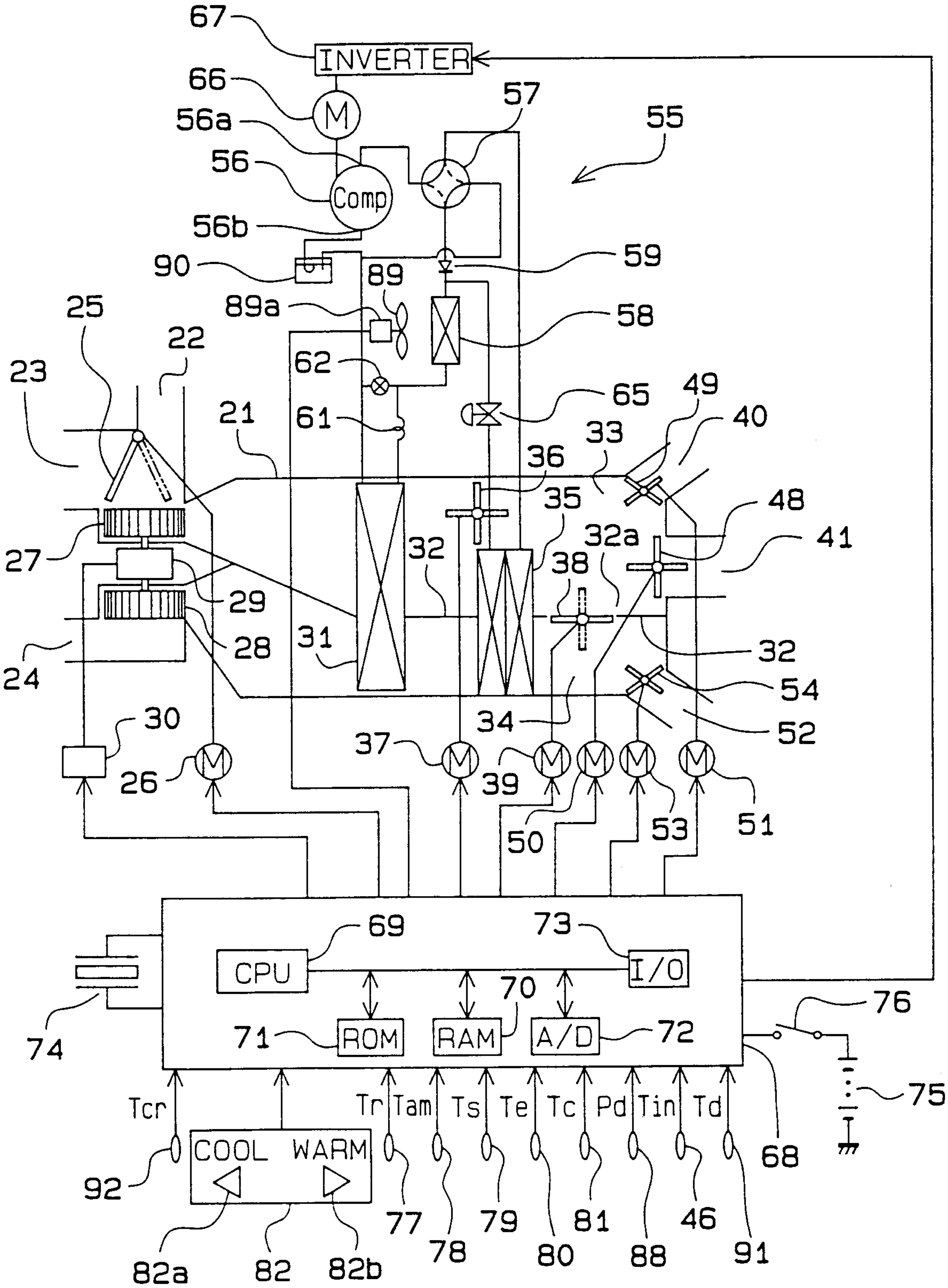
INVERTER
M
Comp
CPU
I/O
ROM
RAM
A/D
COOL
WARM
Tcr
Tr
Tam
Ts
Te
Tc
Pd
Tin
Td

FIG. 2

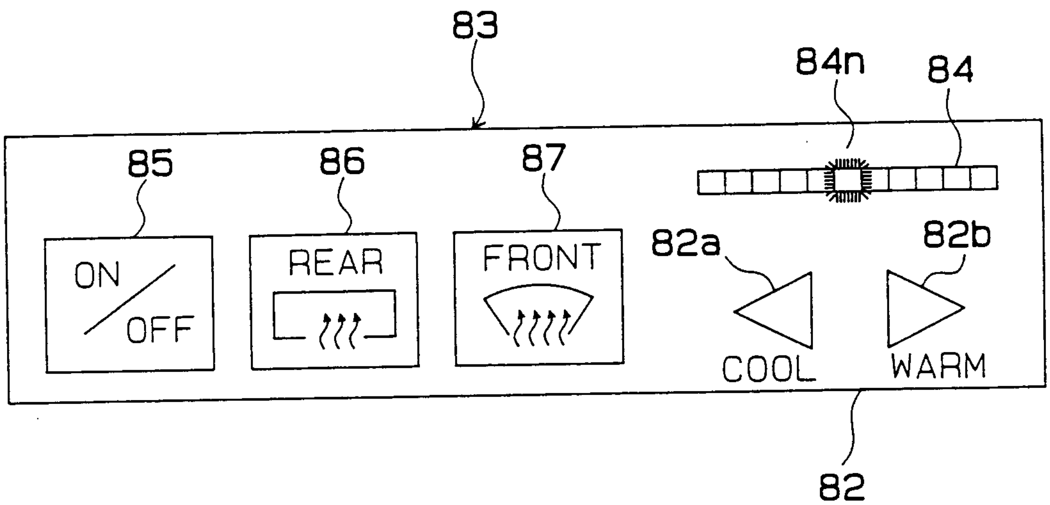

# FIG. 3

| INPUT | | | OUTPUT |
|---|---|---|---|
| MODE OF REFRIGERANT CYCLE 55 | COMPRESSOR | OUTPUT DATE OF EACH SENSOR | MODE OF OUTSIDE FAN 89 |
| COOLING | ON | Tam 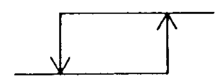 22 25 (°C) | Hi |
| | | | Lo |
| HEATING | ON | Tam 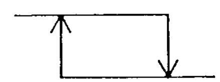 13 16 (°C) | Hi |
| | | | Lo |
| DEHUMIDIFING | ON | Pd 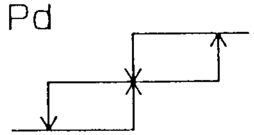 17 18 (kgf/cm²G) Td 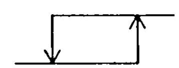 109 110 (°C) | Hi |
| | | | Lo |
| | | | OFF |

FIG.4A

FIG.4

| |
|---|
| FIG.4A |
| FIG.4B |

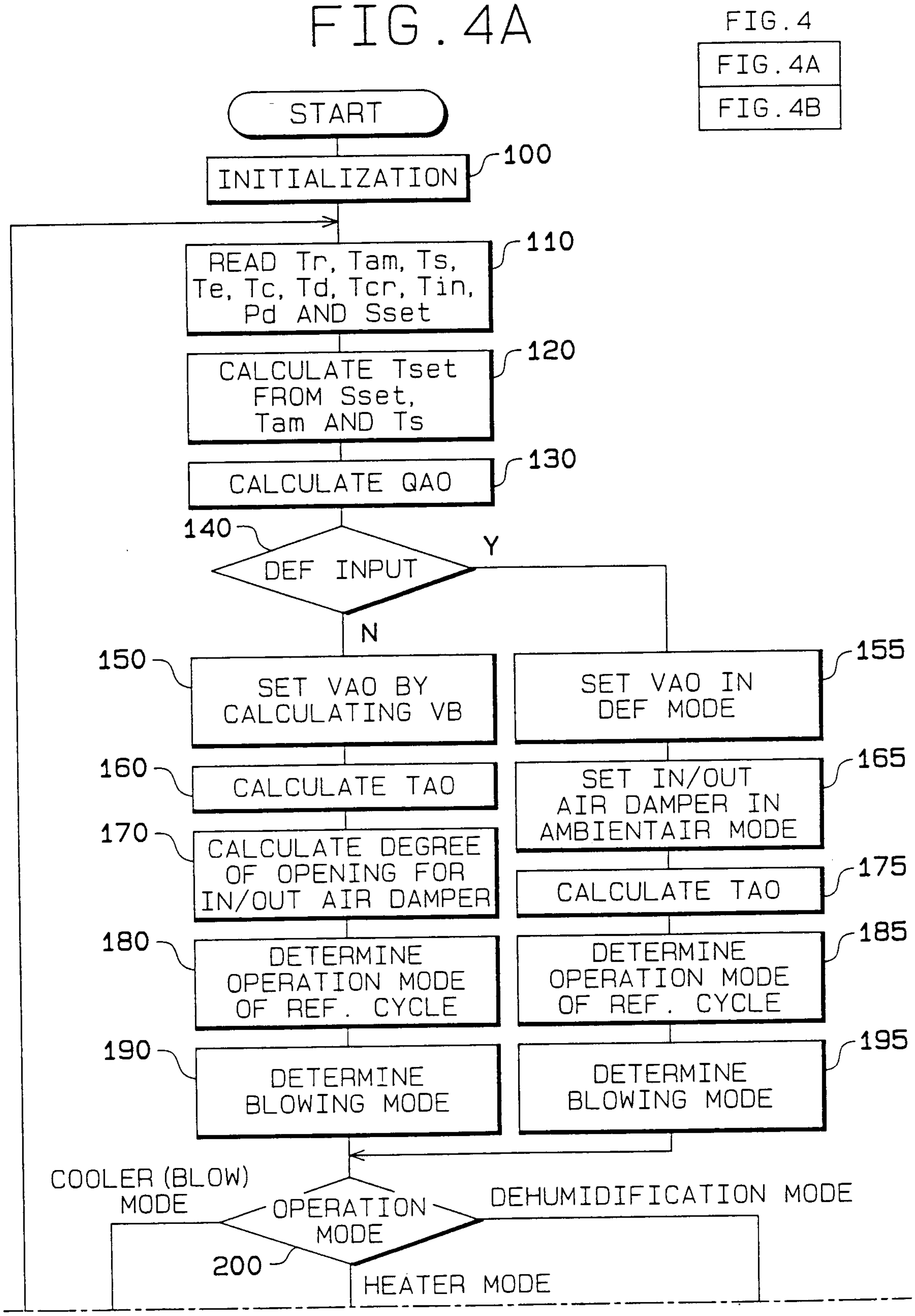

FIG. 4B

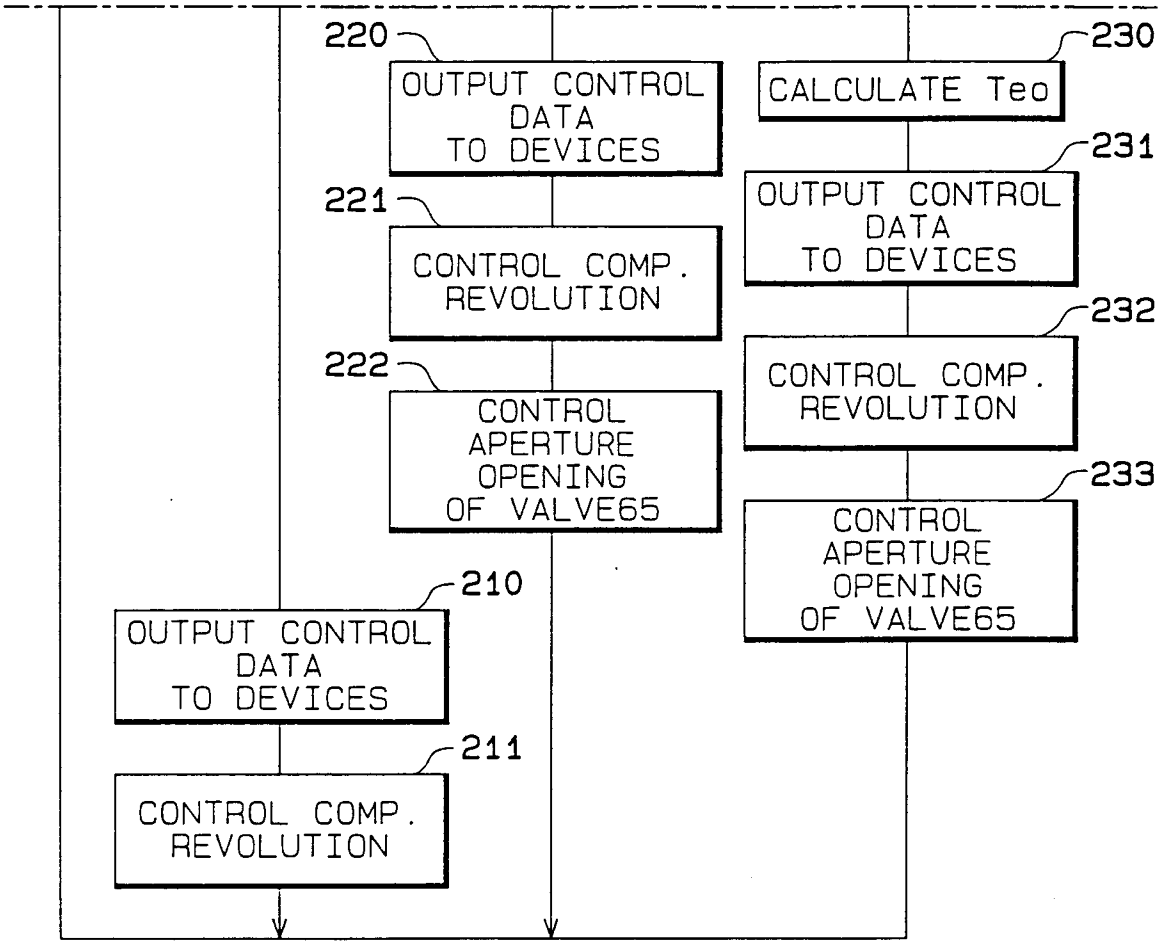
220
OUTPUT CONTROL DATA TO DEVICES
221
CONTROL COMP. REVOLUTION
222
CONTROL APERTURE OPENING OF VALVE65
230
CALCULATE Teo
231
OUTPUT CONTROL DATA TO DEVICES
232
CONTROL COMP. REVOLUTION
233
CONTROL APERTURE OPENING OF VALVE65
210
OUTPUT CONTROL DATA TO DEVICES
211
CONTROL COMP. REVOLUTION

FIG.5A

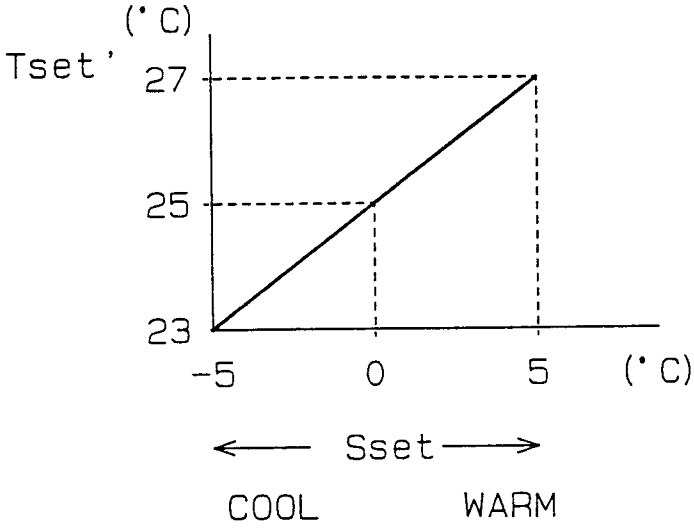


FIG.5B

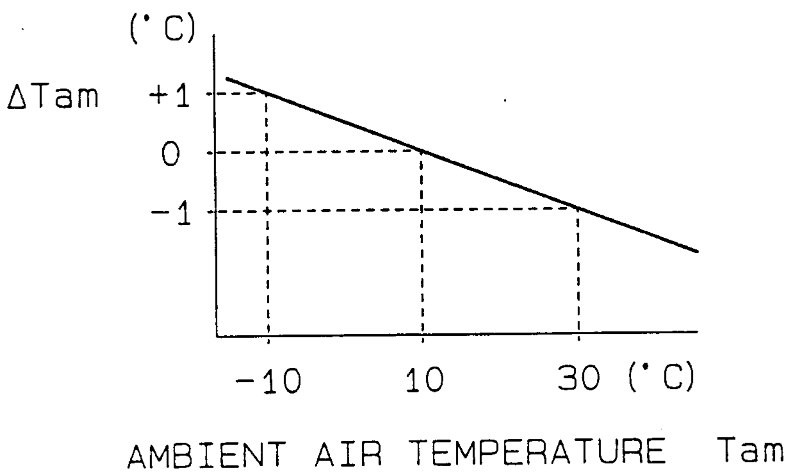


FIG.5C

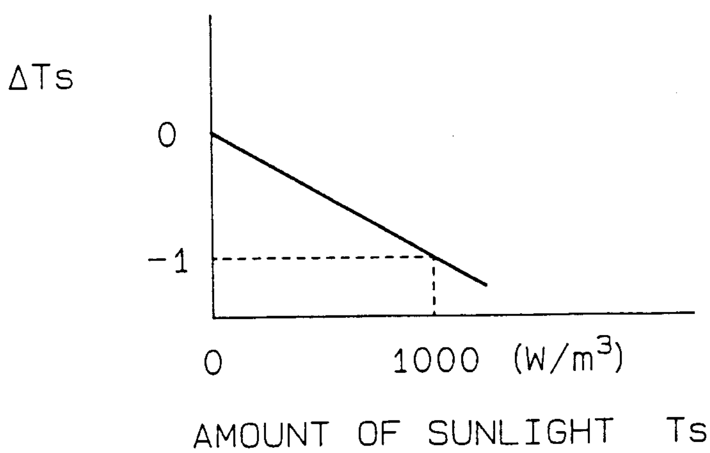

FIG.6

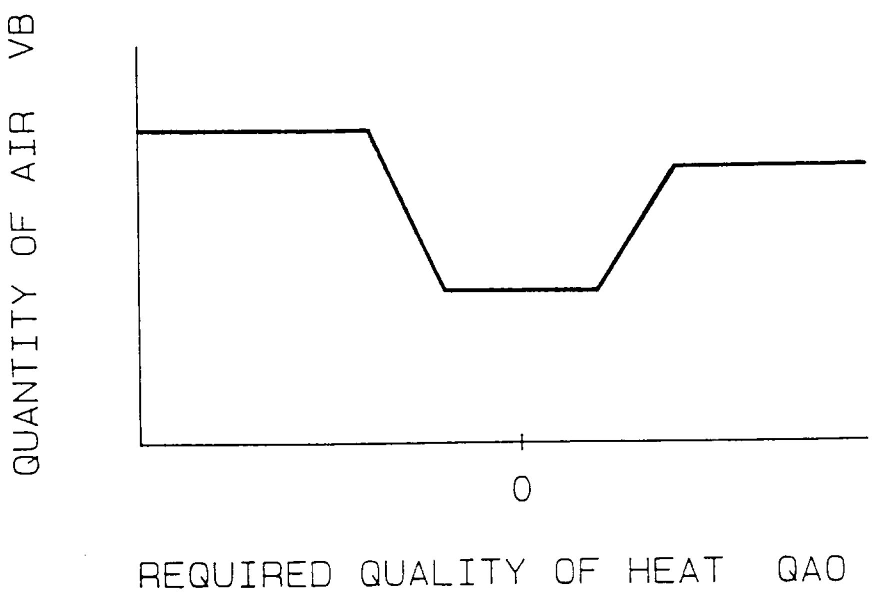
QUANTITY OF AIR VB
0
REQUIRED QUALITY OF HEAT QAO

FIG.7

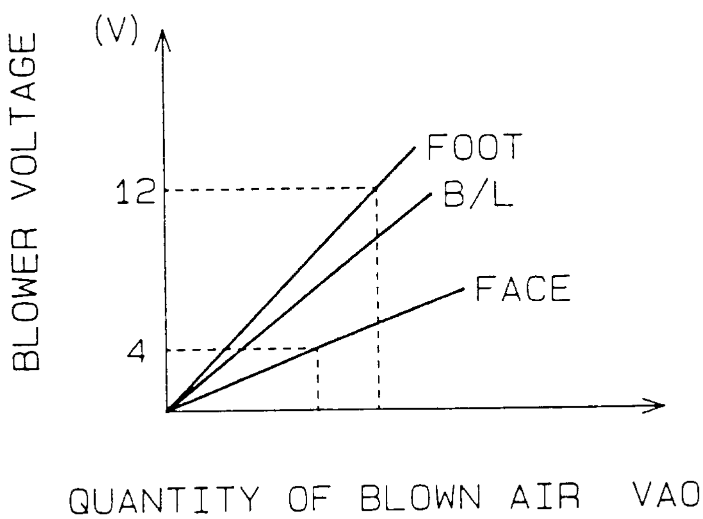
(V)
BLOWER VOLTAGE
12
4
FOOT
B/L
FACE
QUANTITY OF BLOWN AIR VAO

FIG.8

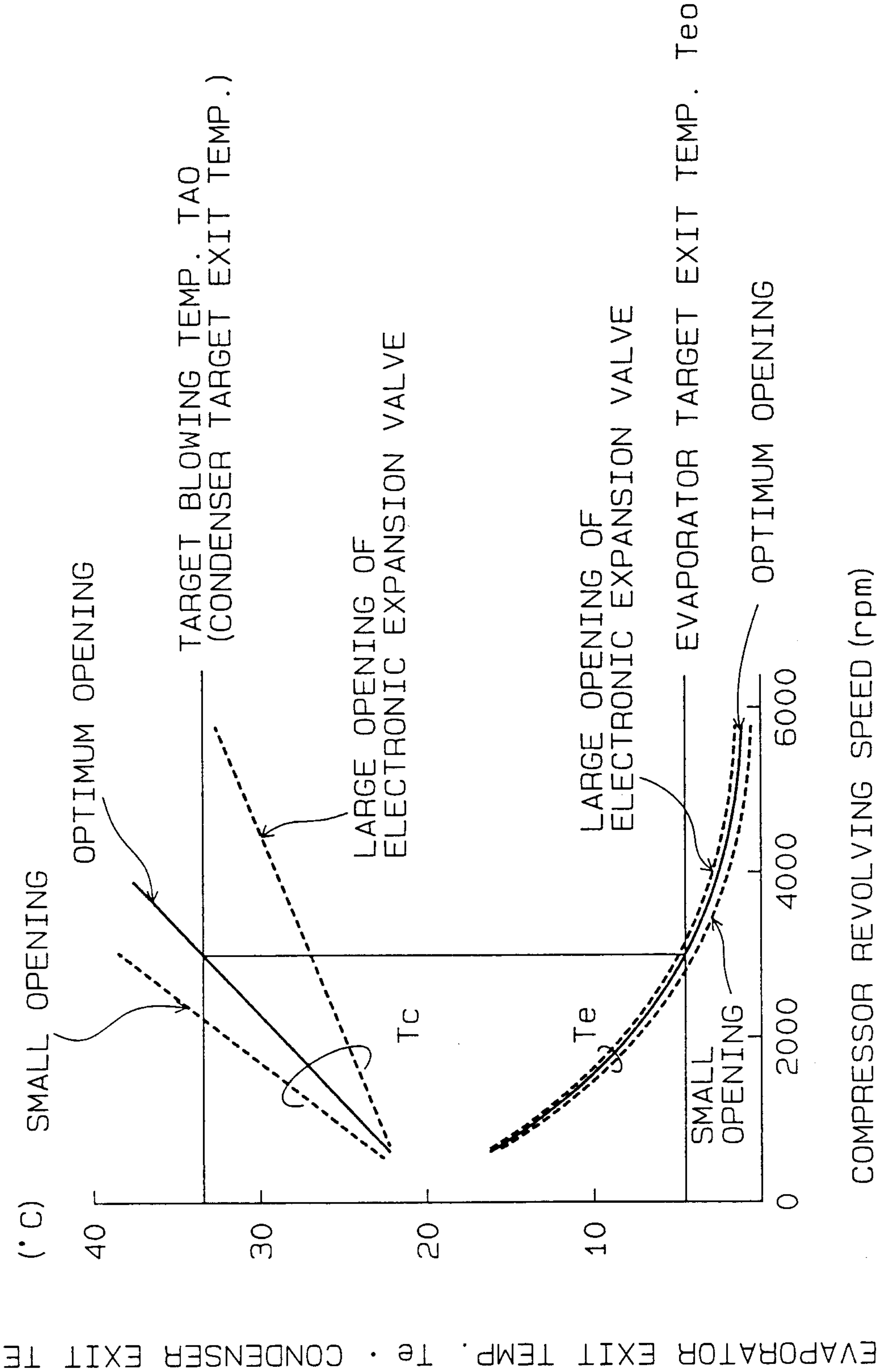
(°C)
40
30
20
10
0
2000
4000
6000
SMALL OPENING
OPTIMUM OPENING
TARGET BLOWING TEMP. TAO
(CONDENSER TARGET EXIT TEMP.)
LARGE OPENING OF
ELECTRONIC EXPANSION VALVE
Tc
Te
LARGE OPENING OF
ELECTRONIC EXPANSION VALVE
EVAPORATOR TARGET EXIT TEMP. Teo
OPTIMUM OPENING
SMALL
OPENING
COMPRESSOR REVOLVING SPEED (rpm)
EVAPORATOR EXIT TEMP. Te · CONDENSER EXIT TEMP. Tc

FIG. 9

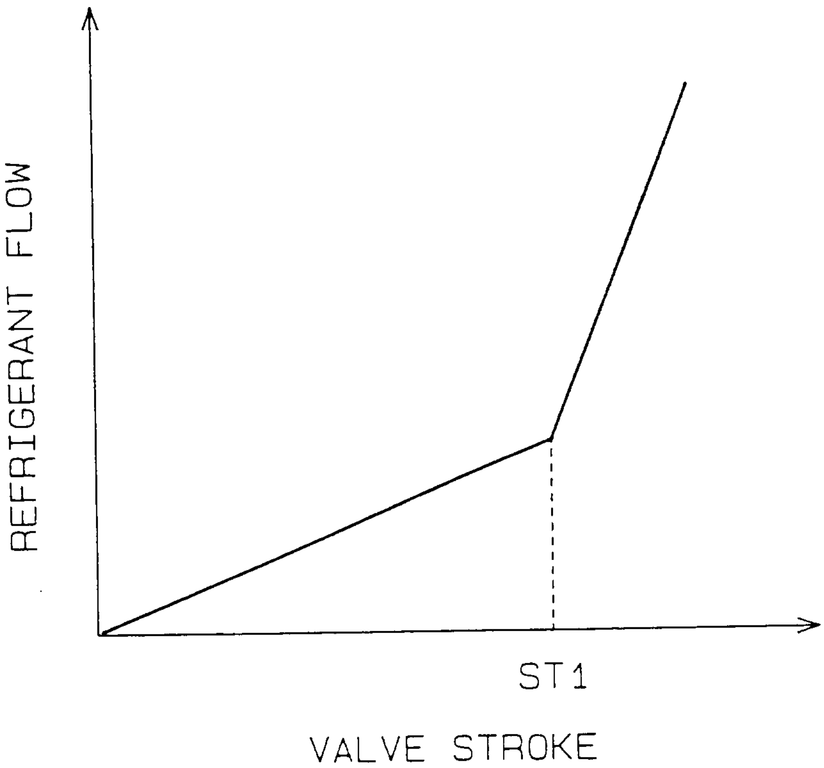
REFRIGERANT FLOW
ST1
VALVE STROKE

FIG. 10

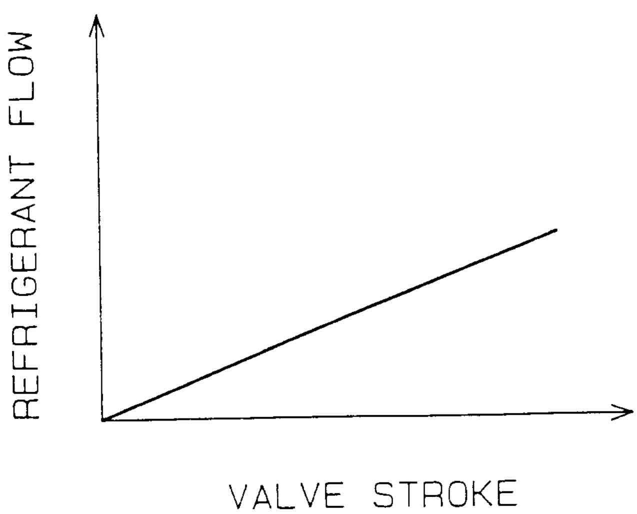
REFRIGERANT FLOW
VALVE STROKE

FIG. 11

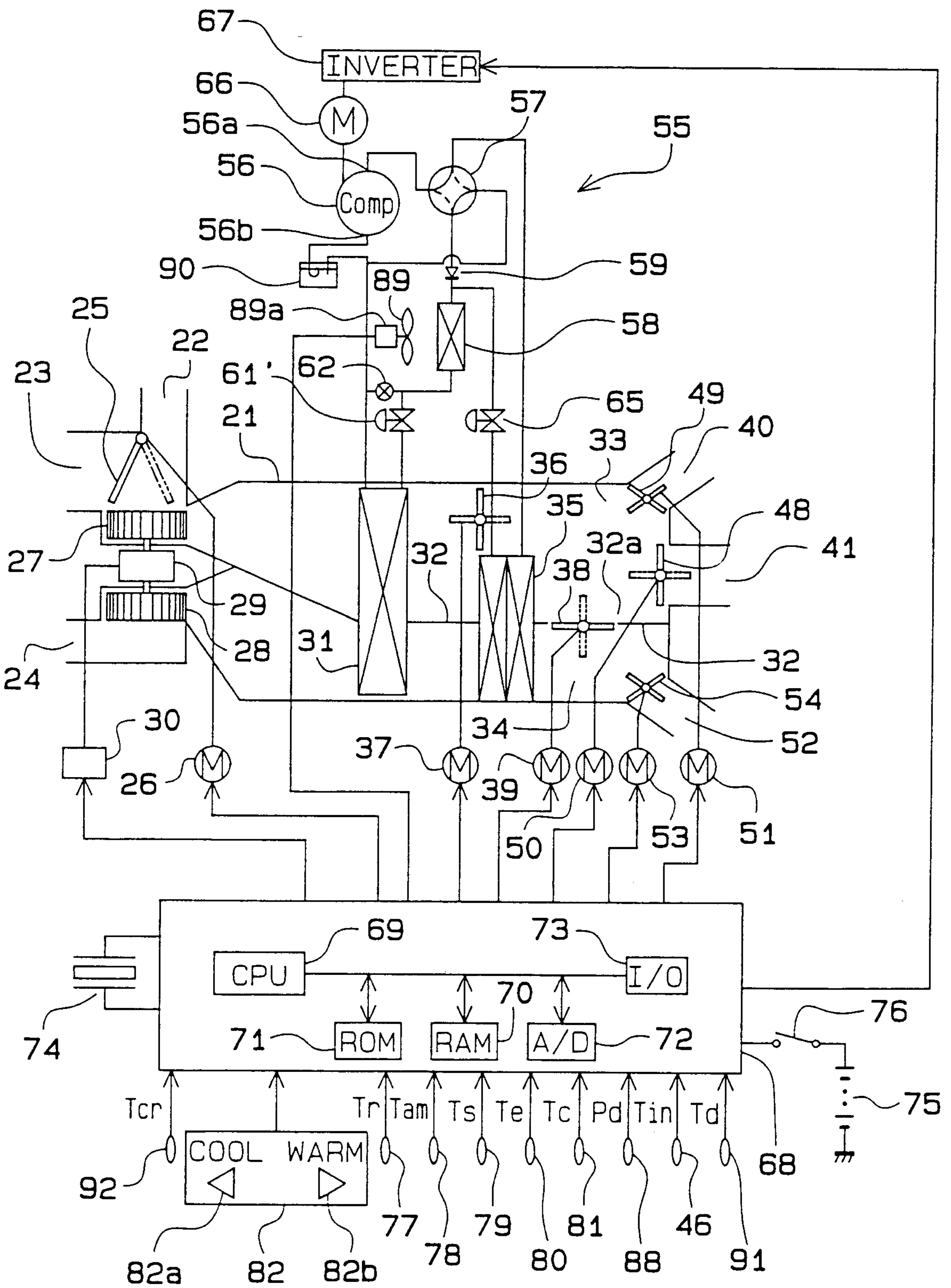
INVERTER
M
Comp
CPU
I/O
ROM
RAM
A/D
COOL
WARM
Tcr
Tr
Tam
Ts
Te
Tc
Pd
Tin
Td

FIG. 12A

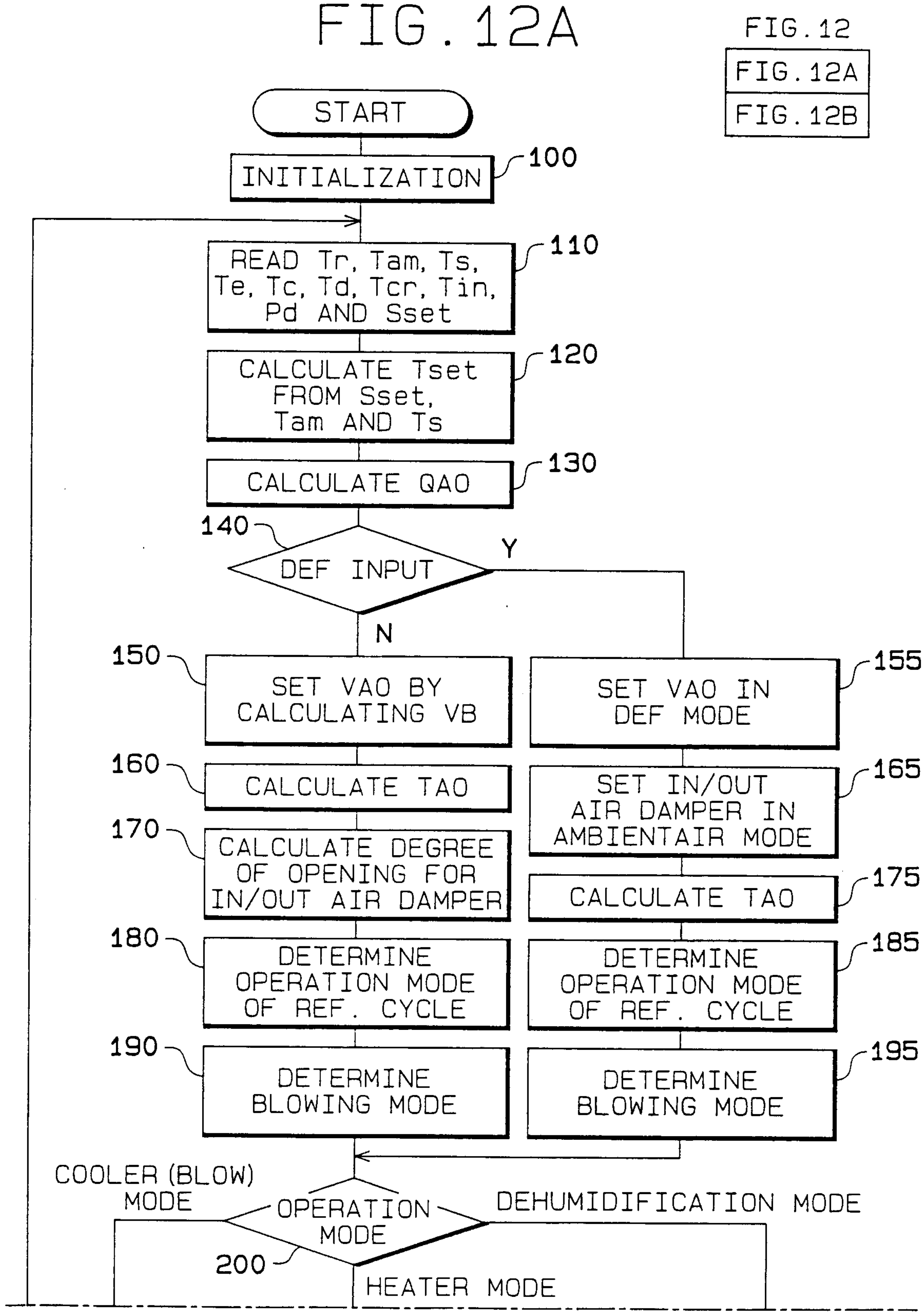
FIG. 12
FIG. 12A
FIG. 12B
START
INITIALIZATION
100
READ Tr, Tam, Ts, Te, Tc, Td, Tcr, Tin, Pd AND Sset
110
CALCULATE Tset FROM Sset, Tam AND Ts
120
CALCULATE QAO
130
140
DEF INPUT
Y
N
150
SET VAO BY CALCULATING VB
155
SET VAO IN DEF MODE
160
CALCULATE TAO
165
SET IN/OUT AIR DAMPER IN AMBIENTAIR MODE
170
CALCULATE DEGREE OF OPENING FOR IN/OUT AIR DAMPER
175
CALCULATE TAO
180
DETERMINE OPERATION MODE OF REF. CYCLE
185
DETERMINE OPERATION MODE OF REF. CYCLE
190
DETERMINE BLOWING MODE
195
DETERMINE BLOWING MODE
COOLER (BLOW) MODE
OPERATION MODE
DEHUMIDIFICATION MODE
200
HEATER MODE

FIG. 12B

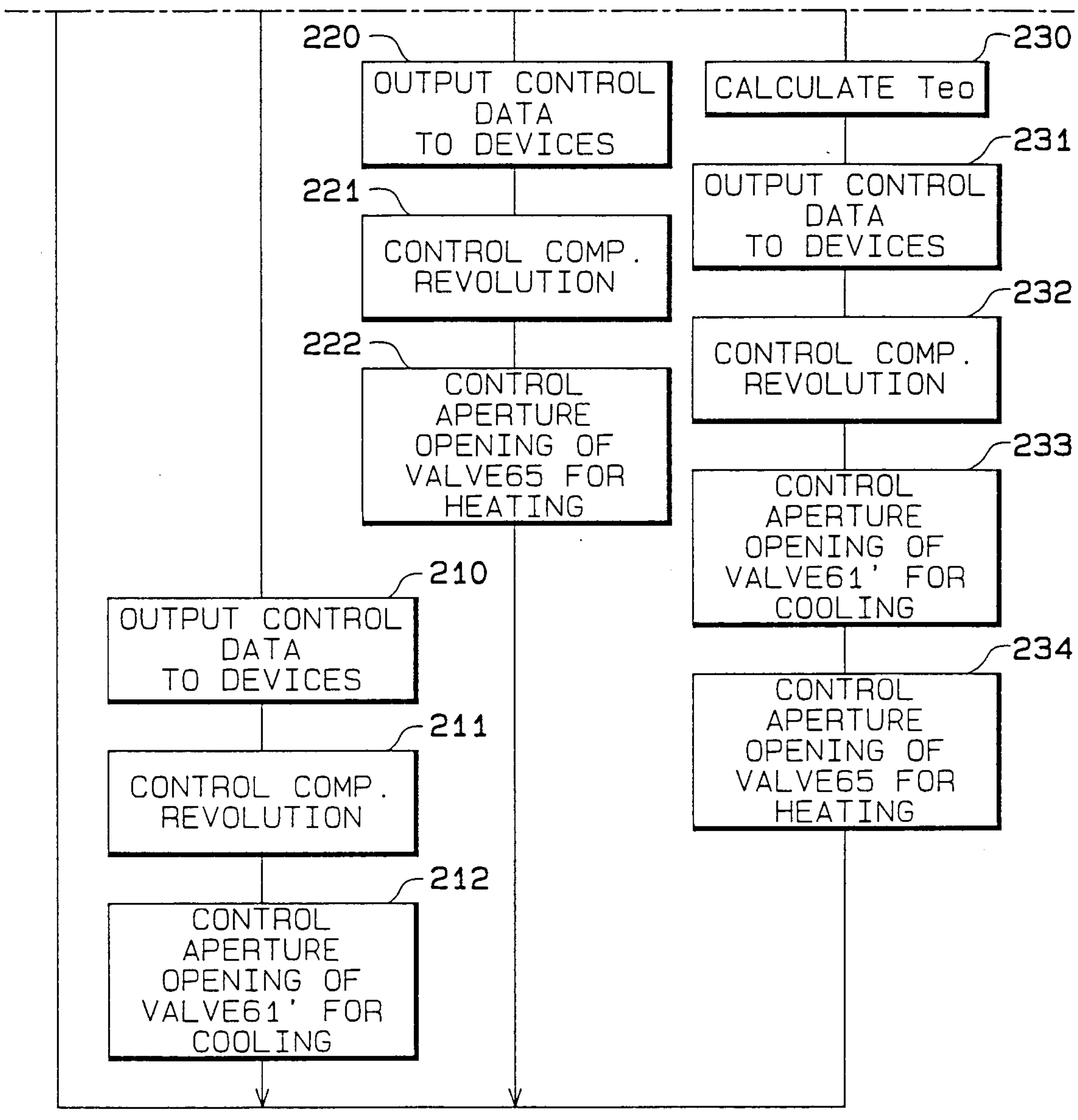
220
OUTPUT CONTROL DATA TO DEVICES
221
CONTROL COMP. REVOLUTION
222
CONTROL APERTURE OPENING OF VALVE65 FOR HEATING
230
CALCULATE Teo
231
OUTPUT CONTROL DATA TO DEVICES
232
CONTROL COMP. REVOLUTION
233
CONTROL APERTURE OPENING OF VALVE61' FOR COOLING
234
CONTROL APERTURE OPENING OF VALVE65 FOR HEATING
210
OUTPUT CONTROL DATA TO DEVICES
211
CONTROL COMP. REVOLUTION
212
CONTROL APERTURE OPENING OF VALVE61' FOR COOLING

FIG. 13

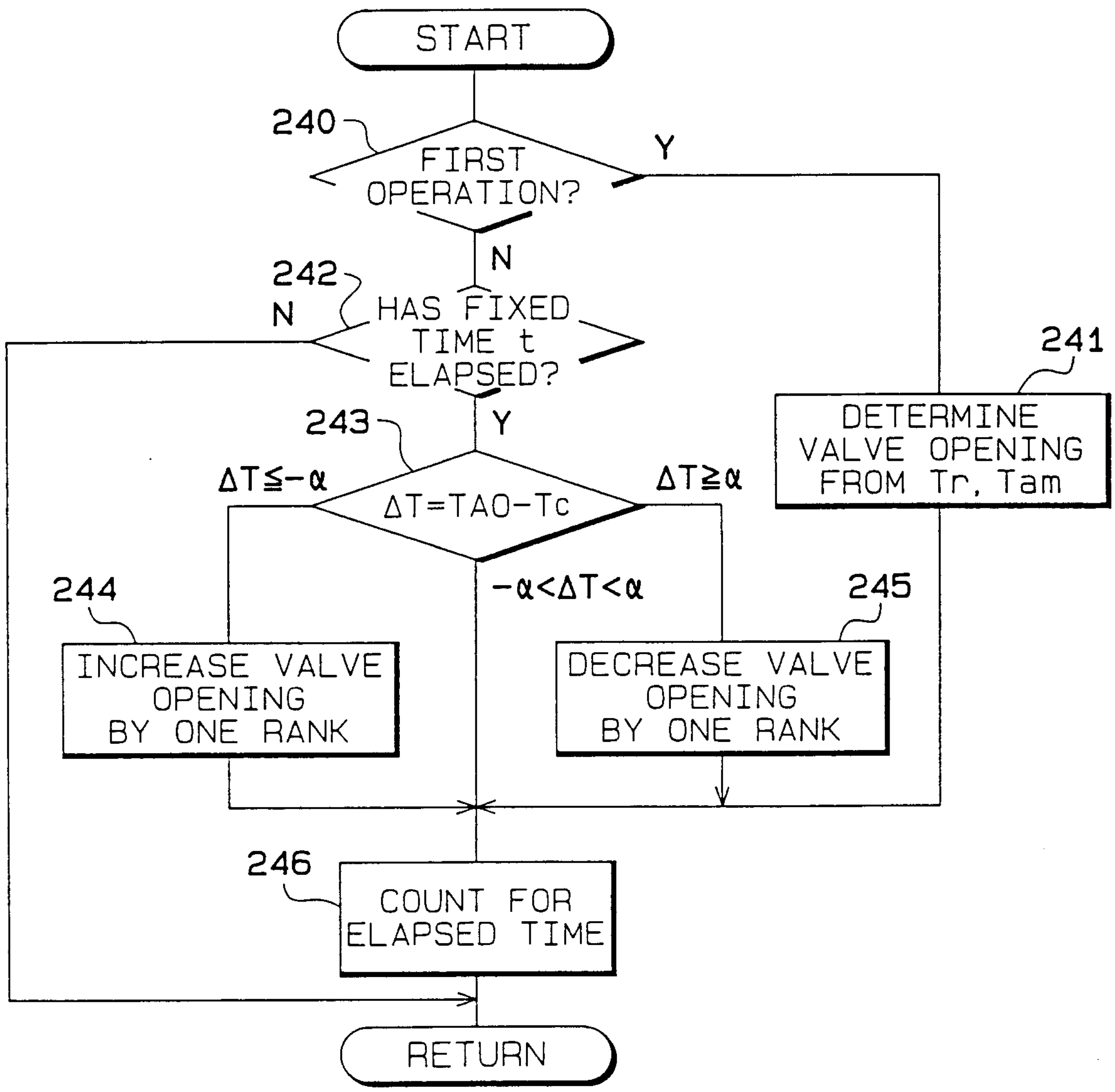
START
240
FIRST OPERATION?
Y
N
242
N
HAS FIXED TIME t ELAPSED?
241
DETERMINE VALVE OPENING FROM Tr, Tam
243
Y
ΔT≦−α
ΔT≧α
ΔT=TAO−Tc
−α<ΔT<α
244
245
INCREASE VALVE OPENING BY ONE RANK
DECREASE VALVE OPENING BY ONE RANK
246
COUNT FOR ELAPSED TIME
RETURN

FIG. 14

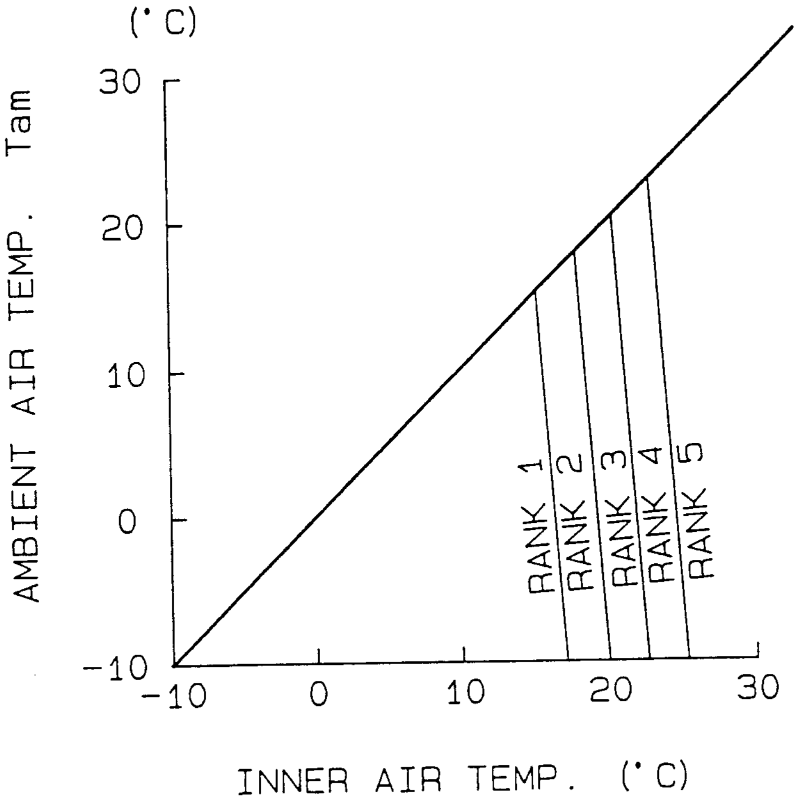


FIG. 15

| | | VALVE OPENING FOR HEATING | VALVE OPENING FOR COOLING |
|---|---|---|---|
| DOWN | RANK 1 | A | D |
| ↑ | RANK 2 | A | C |
| | RANK 3 | B | C |
| ↓ | RANK 4 | C | C |
| UP | RANK 5 | D | C |

FIG. 16

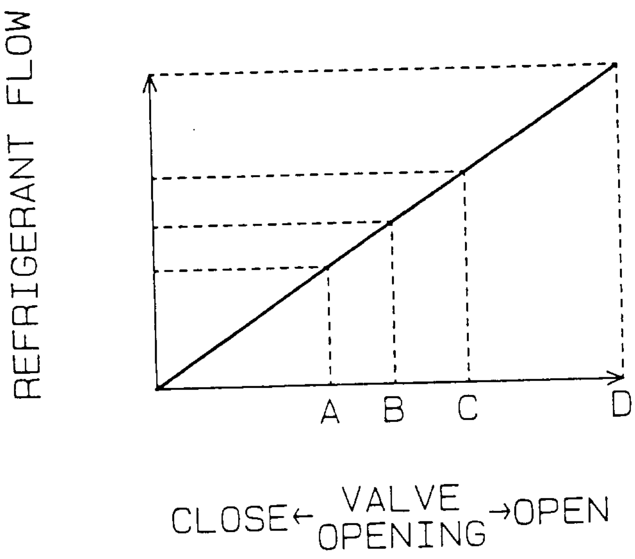
REFRIGERANT FLOW
A
B
C
D
CLOSE← VALVE OPENING →OPEN

FIG. 17

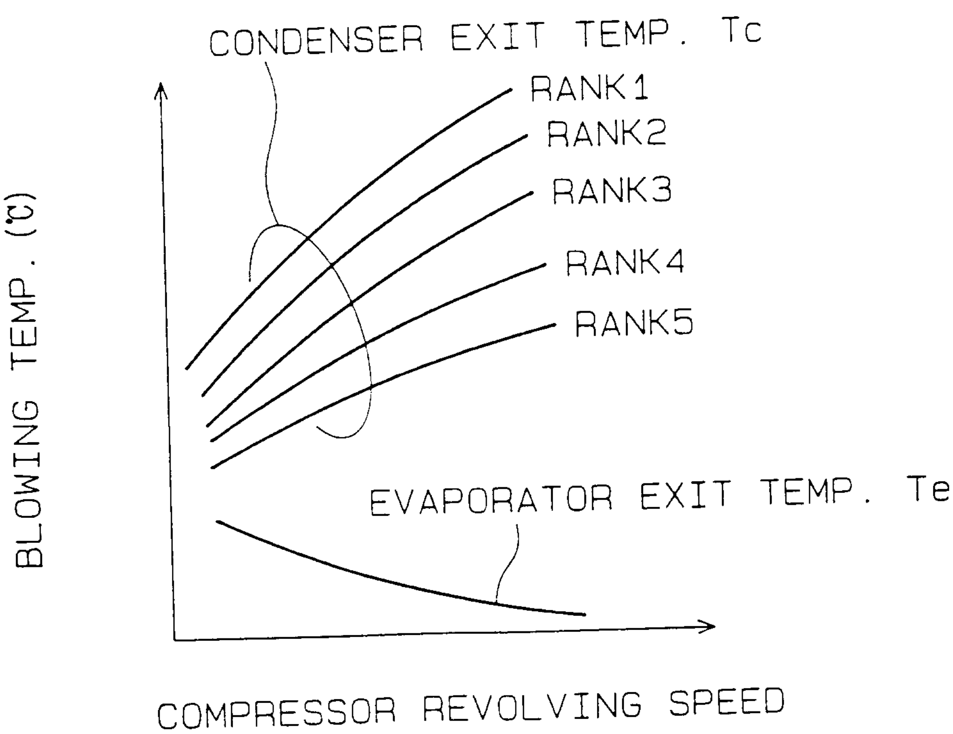
CONDENSER EXIT TEMP. Tc
RANK1
RANK2
RANK3
RANK4
RANK5
BLOWING TEMP. (℃)
EVAPORATOR EXIT TEMP. Te
COMPRESSOR REVOLVING SPEED

FIG. 18

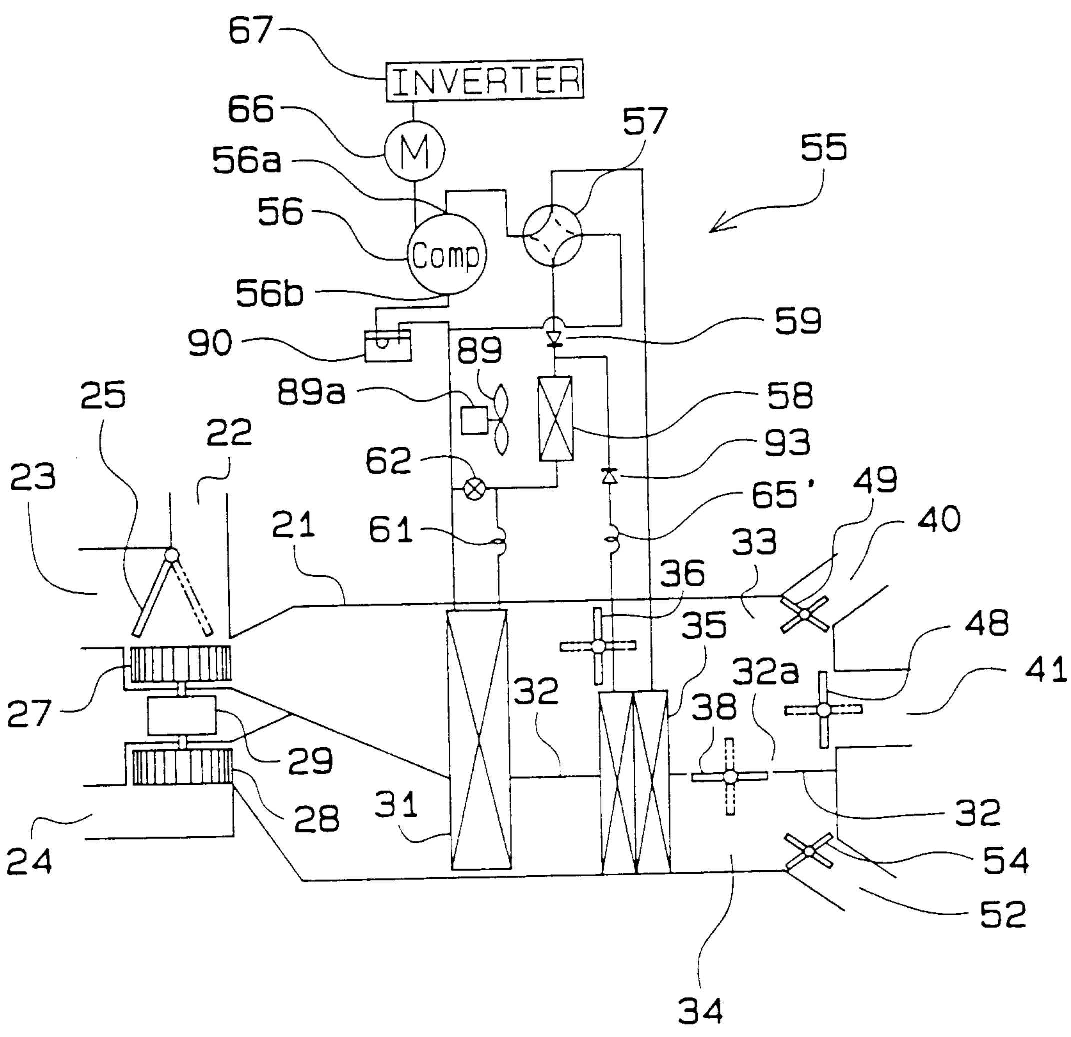
67
INVERTER
66
M
56a
56
Comp
56b
57
55
59
90
89
89a
58
93
62
65'
61
25
22
23
21
49
40
33
36
35
48
32a
41
27
32
38
29
28
31
32
24
54
52
34

FIG. 19A

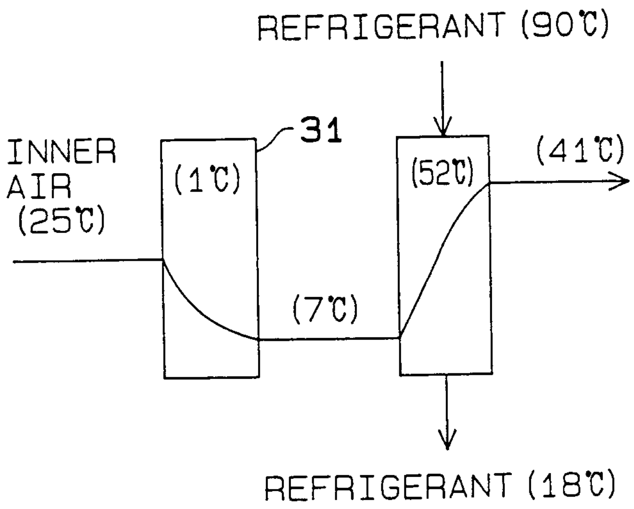


FIG. 19B

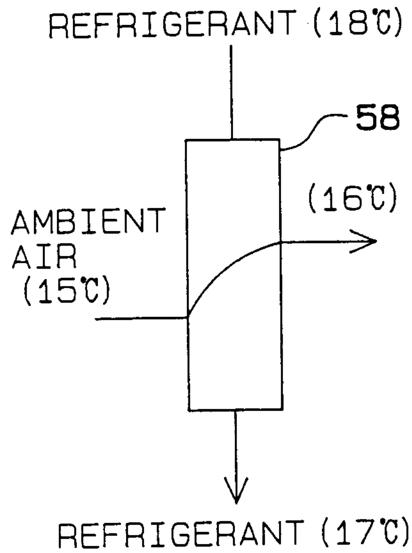


FIG. 20

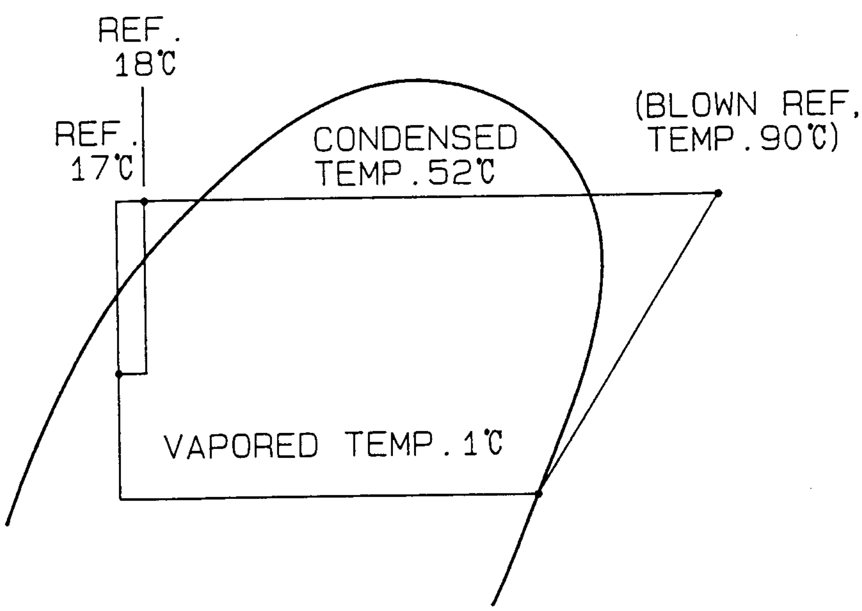

FIG.21

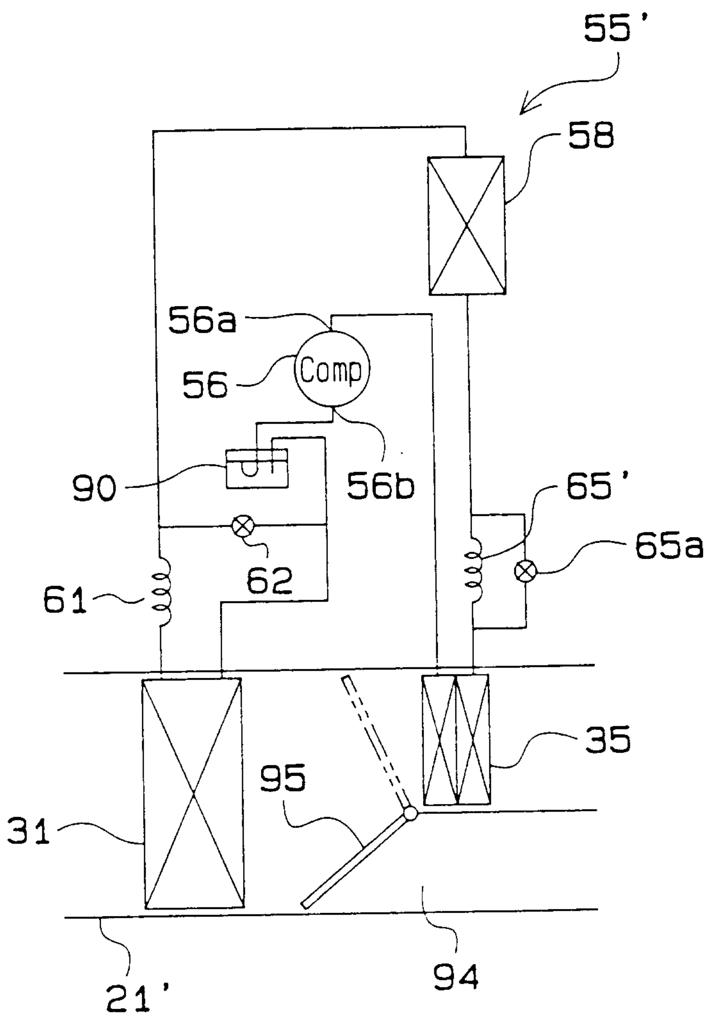

FIG.22

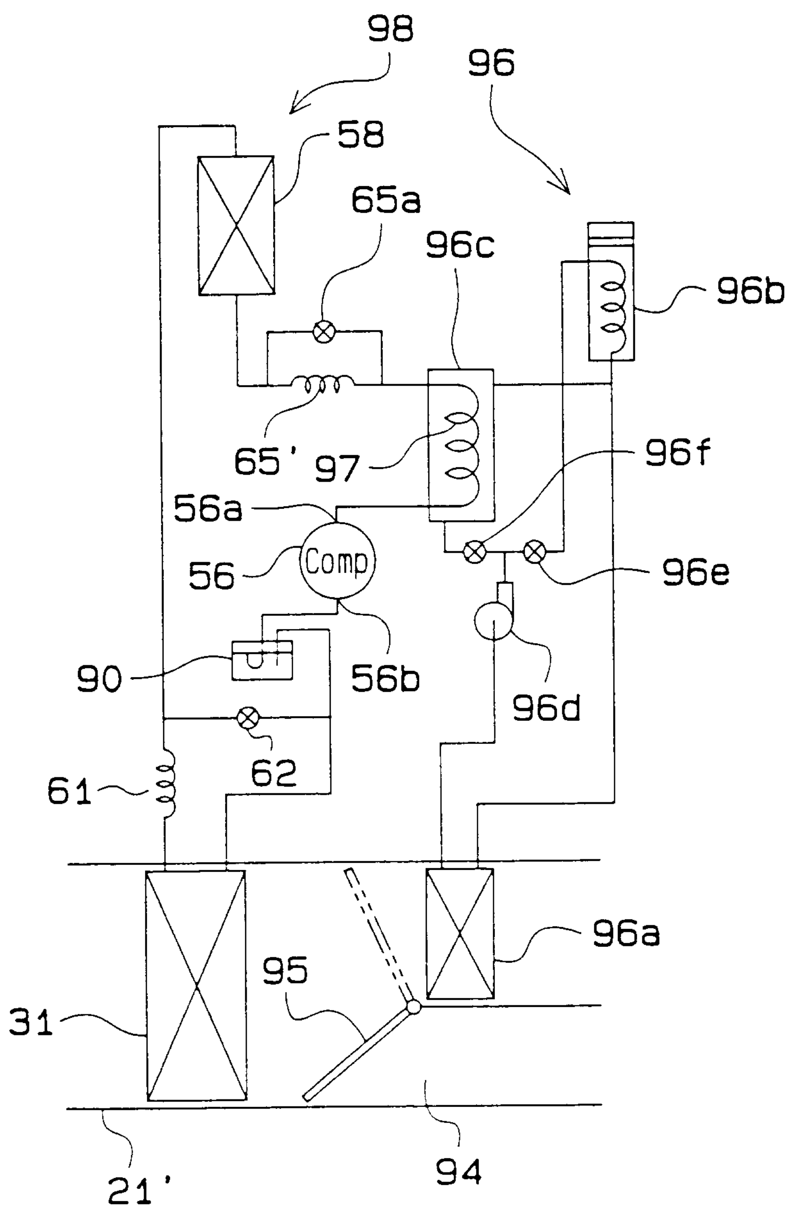
98
96
58
65a
96c
96b
65'
97
96f
56a
56
Comp
96e
90
56b
96d
62
61
96a
95
31
21'
94

FIG. 23

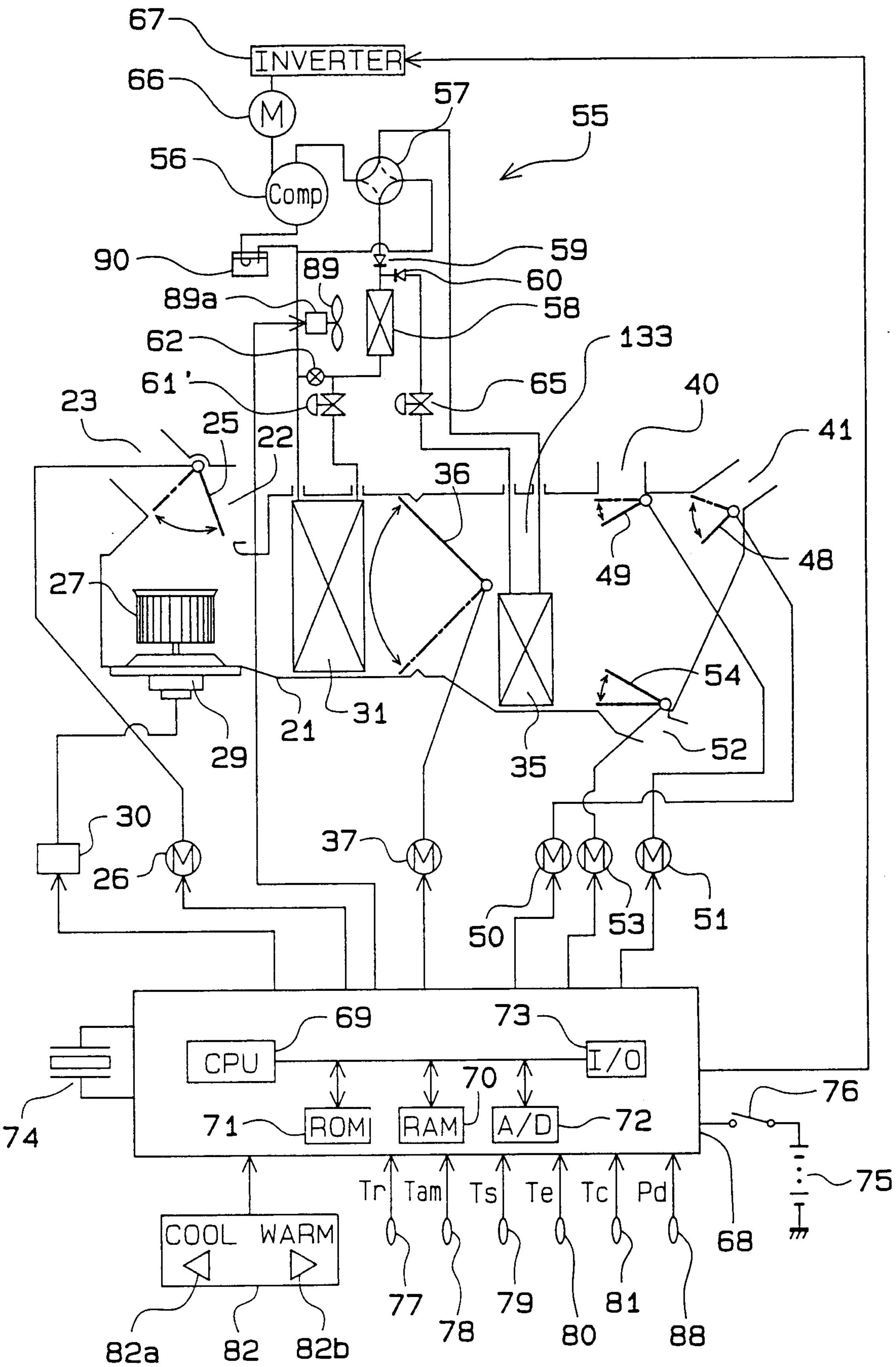
67
INVERTER
66
M
57
55
56
Comp
59
90
89
60
89a
58
62
133
61'
65
23
40
41
25
22
36
49
48
27
54
21
31
35
52
29
30
37
26
M
50
53
51
69
73
CPU
I/O
70
74
71
ROM
RAM
A/D
72
76
Tr
Tam
Ts
Te
Tc
Pd
75
68
COOL
WARM
77
78
79
80
81
88
82a
82
82b